# EUROPEAN PATENT SPECIFICATION

(11) **EP 4 512 568 B1**
(45) Date of publication and mention of the grant of the patent: **21.10.2026**
(21) Application number: 23791892.5
(22) Date of filing: 19.04.2023
(51) Int. Cl.: B23K 26/364, B23K 26/00, C21D 8/12, B23K 26/03, B23K 26/08, C21D 9/46, B23K 103/04, B23K 101/16, B23K 101/18

(54) **STEEL SHEET PROCESSING APPARATUS, AND METHOD FOR CONTROLLING A STEEL SHEET PROCESSING APPARATUS**
VORRICHTUNG ZUR STAHLBLECHBEARBEITUNG UND VERFAHREN ZUR STEUERUNG EINER VORRICHTUNG ZUR STAHLBLECHBEARBEITUNG
DISPOSITIF DE TRAITEMENT DE TÔLES D'ACIER ET PROCÉDÉ DE COMMANDE D'UN DISPOSITIF DE TRAITEMENT DE TÔLES D'ACIER

(30) Priority: 19.04.2022 JP 2022068829
(43) Date of publication of application: 26.02.2025
(73) Proprietor: NIPPON STEEL CORPORATION, Chiyoda-ku Tokyo 100-8071 (JP)
(72) Inventor: Sakai, Tatsuhiko, Tokyo 100-8071 (JP); Hamamura, Hideyuki, Tokyo 100-8071 (JP)
(74) Representative: Vossius & Partner Patentanwälte Rechtsanwälte mbB
(86) International application number: PCT/JP2023/015605
(87) International publication number: WO 2023/204244

(56) References cited:
- WO-A1-2016/171130
- WO-A1-2021/229933
- JP-A- 2017 122 264
- JP-A- 2020 090 709
- JP-A- 2020 185 585
- JP-A- 2021 030 230
- US-A1- 2019 250 517
- S BLUEMEL ET AL: "Time resolved analysis of nanosecond pulsed laser processing of carbon fiber reinforced plastics", JOURNAL OF LASER APPLICATIONS, AMERICAN INSTITUTE OF PHYSICS, 2 HUNTINGTON QUADRANGLE, MELVILLE, NY 11747, vol. 29, no. 2, 17 May 2017 (2017-05-17), XP012218900, ISSN: 1042-346X, [retrieved on 20170517], DOI: 10.2351/1.4983242

## Description

The present invention relates to a steel sheet processing apparatus and a method for controlling a steel sheet processing apparatus, see claims 1 and 10 respectively.

Priority is claimed on Japanese Patent Application No. 2022-068829, filed April 19, 2022.

### BACKGROUND ART

Steel sheets are subjected to various processing. For example, there are various techniques for improvement in performance of a steel sheet, such as a friction characteristic and adhesiveness of the surface, by laser processing of the surface of the steel sheet. As a more specific example, a magnetic domain control by laser irradiation is known in which a groove having a depth of several tens of µm is formed on the surface of an electrical steel sheet to improve the iron loss. In the magnetic domain control by laser irradiation of an electrical steel sheet, a surface of a steel sheet to be passed is irradiated with a focused laser beam and the laser beam is repeatedly scanned along a direction substantially parallel to the sheet width direction of the steel sheet to form linear grooves on the surface of the steel sheet at constant intervals along the sheet passing direction of the steel sheet. The formation of the grooves results in refinement of the magnetic domain of the electrical steel sheet, and thus the iron loss can be reduced.

Specifically, in formation of a groove in the magnetic domain control by laser irradiation, while a belt-shaped electrical steel sheet is continuously passed (conveyed) in the longitudinal direction, a surface of the steel sheet is irradiated with a laser beam and the laser beam is scanned in a direction substantially parallel to the sheet width direction of the steel sheet to form a groove having a depth of 20 to 30 [µm] in the steel sheet. The cross-sectional shape of the groove formed in this case greatly affects the iron loss and the magnetic flux density.

The processing grade of a steel sheet by a laser beam is generally depends not only on the power of the laser but also on the processing conditions such as the laser focusing diameter and the scanning speed. Therefore, the formed groove may have a shape not satisfying a predetermined standard, such as a depth or a width, required in the magnetic domain control process, due to an increase or decrease in power of the laser irradiation apparatus, a change in the focusing diameter caused by focus variation of the laser focusing element, a change in the scanning speed of the laser, and the like.

Patent Document 1 discloses a technique in which a leakage magnetic flux sensor is installed in a laser groove processing unit downstream in the sheet passing direction, a magnetic flux leaking from a steel sheet surface on which a groove is formed is detected, and the quality of the groove is determined. According to this technique, a leakage magnetic flux signal generated in formation of a groove having a desired shape is acquired in advance as a reference, the reference signal serving as a reference is compared with a leakage magnetic flux signal continuously obtained in a manufacturing line, and thus the quality of a groove can be determined. Patent Document 2 relates to a monitoring method for laser groove processing. Patent Document 3 relates to a target image capturing device for optical lithography of a semiconductor process.

### Citation List

### Patent Document

Patent Document 1: Published Japanese Translation No. 2019-510130 of the PCT International Publication
Patent Document 2: JP 2017 122264 A, describing the preamble of claims 1 and 10
Patent Document 3: US 2019/250517 A1

### SUMMARY OF INVENTION

### Technical Problem

However, in the case of measuring a leakage magnetic flux using the technique disclosed in Patent Document 1, if the groove is as shallow as about 30 [µm], the leakage magnetic flux is generated from the groove only in the very vicinity of the steel sheet surface, so that there is a problem that a leakage magnetic flux sensor having a high measurement accuracy needs to be disposed so as to be extremely close to the steel sheet surface.

Furthermore, the leakage magnetic flux signal used in the technique disclosed in Patent Document 1 is affected by surface states such as irregularities on the surface of the steel sheet, the cross-sectional shape of the groove, a crack or a flaw on the base metal, and an inclusion. Therefore, the leakage magnetic flux sensor is provided on the side opposite from the groove forming surface to reduce the influence of a molten protrusion portion or a flaw generated on the surface of the steel sheet upon the leakage magnetic flux. However, a leakage magnetic flux signal to be detected becomes finer, and therefore, for example, in a case where a steel sheet is conveyed at a predetermined sheet passing speed, a measurement error is likely to occur, and a steel sheet having a favorably processed groove may be not stably obtained even if the groove is processed on the basis of the detected leakage magnetic flux signal.

The present invention has been made to solve such problems, and an object of the present invention is to provide a steel sheet processing apparatus in which a steel sheet having a favorably processed groove can be stably obtained while the steel sheet is conveyed, and a method for controlling the steel sheet processing apparatus.

### Solution to Problem

In order to solve the above problems and achieve the object, the invention is defined in a steel sheet processing apparatus for processing a groove on a surface of a steel sheet according to claim 1, and a method for controlling a steel sheet processing apparatus for processing a groove on a surface of a steel sheet according to claim 10.

Further preferred embodiments of the present invention are defined in the dependent claims.

Preferred embodiments are defined in the dependent claims.

### Advantageous Effects of Invention

According to each aspect of the present invention described above, even in a case where the steel sheet is passed at a high sheet passing speed, a captured image can be generated in which a groove formed on the surface of the steel sheet is clearly imaged. Thus, the state of the groove can be determined on the basis of the captured image, and feedback control over groove processing can be performed on the basis of the determination, so that a steel sheet can be stably manufactured that can achieve desired magnetic characteristics.

### BRIEF DESCRIPTION OF DRAWINGS

[FIG. 1] is a flowchart explaining an outline of a method for controlling a steel sheet processing apparatus according to each embodiment of the present invention.
[FIG. 2] is a perspective view illustrating a schematic configuration of a steel sheet processing apparatus in a first embodiment of the present invention.
[FIG. 3] is a timing chart showing a relation between an exposure time by an imaging unit and an irradiation time by an illumination unit in the first embodiment.
[FIG. 4] is a block diagram illustrating a schematic configuration of the steel sheet processing apparatus of the first embodiment.

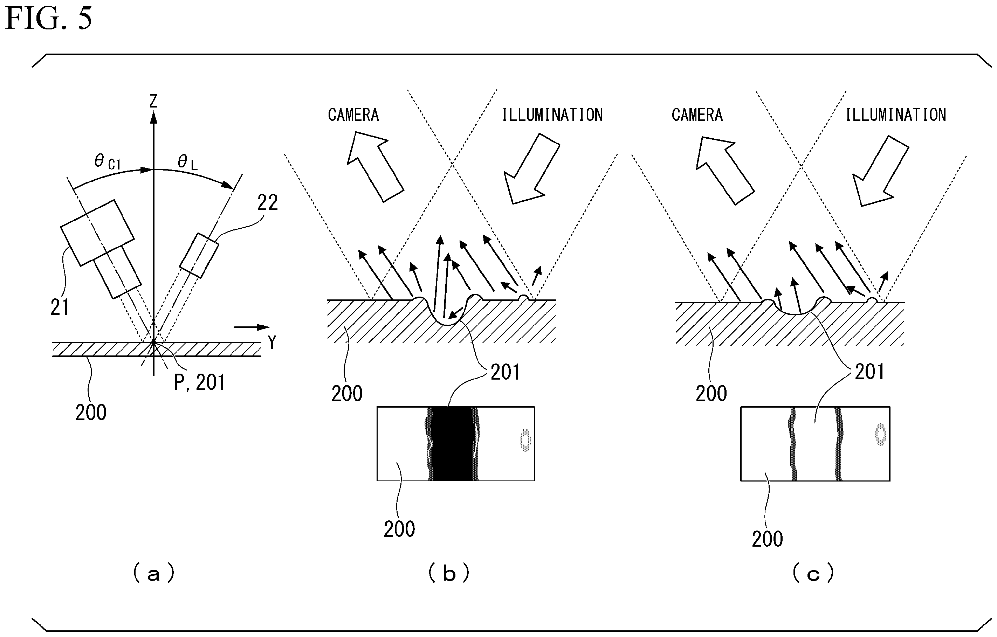

[FIG. 5] shows views illustrating an observation state of a groove in the first embodiment. Here, (a) is a longitudinal sectional view along the sheet passing direction of the steel sheet. Furthermore, (b) shows views illustrating a case where the groove has an appropriate depth (dg = 25 µm), and the upper view is a longitudinal sectional view of the groove, and the lower view is a plan view of the groove. In addition, (c) shows views illustrating a case where the groove has a shallow depth (dg = 15 µm), and the upper view is a longitudinal sectional view of the groove, and the lower view is a plan view of the groove.
[FIG. 6] is a photograph showing an example of a longitudinal sectional shape of a groove.
[FIG. 7] (a) shows views illustrating a case where a favorable groove is formed in the first embodiment, and the upper view is a plan view of the steel sheet, and the lower view is an image of a captured image of the groove. Furthermore, (b) is a view showing an analysis result based on the captured image of (a).
[FIG. 8] shows graphs explaining luminance analysis processing shown in FIG. 7 in which the captured image is used. Here, (a) shows the luminance distribution in the sheet passing direction, (b) shows the average luminance distribution in the sheet passing direction, and (c) shows the relation between the luminance ratio I (Ag'/As') and the groove depth.
[FIG. 9] (a) shows views illustrating a case where an unfavorable shallow groove is formed in the first embodiment, and the upper view is a plan view of the steel sheet, and the lower view is an image of a captured image of the groove. Furthermore, (b) is a view showing an analysis result based on the captured image of (a).
[FIG. 10] shows graphs explaining luminance analysis processing in which the captured image of FIG. 9 is used. Here, (a) shows the luminance distribution in the sheet passing direction, (b) shows the average luminance distribution in the sheet passing direction, and (c) shows the relation between the luminance ratio I (Ag'/As') and the groove depth.
[FIG. 11] is a block diagram illustrating a schematic configuration of a steel sheet processing apparatus in a second embodiment of the present invention.
[FIG. 12] is a block diagram illustrating a schematic configuration of a steel sheet processing apparatus in a third embodiment of the present invention.
[FIG. 13] shows explanatory diagrams of machine learning processing in a fourth embodiment of the present invention. Here, (a) shows a schematic diagram for explanation of learning processing, and (b) shows a schematic diagram for explanation of inference processing.
[FIG. 14] is a view illustrating a schematic configuration of a steel sheet processing apparatus in a fifth embodiment of the present invention, and is a longitudinal sectional view along the sheet thickness direction of a steel sheet.
[FIG. 15] shows views illustrating a case where a favorable groove (dg = 25 µm) is formed in the fifth embodiment, and (a) shows a longitudinal sectional view of the steel sheet, (b) shows a captured image captured by a camera 21a, and (c) shows a captured image captured by a camera 21b.
[FIG. 16] shows views illustrating a case where an unfavorable shallow groove (dg = 15 µm) is formed in the fifth embodiment, and (a) shows a longitudinal sectional view of the steel sheet, (b) shows a captured image captured by the camera 21a, and (c) shows a captured image captured by the camera 21b.
[FIG. 17] is a view explaining the fifth embodiment, and is a longitudinal sectional view along the sheet thickness direction of the steel sheet.
[FIG. 18] is a graph explaining the fifth embodiment, and the graph shows a relation between a side wall inclination angle of the groove and an iron loss improvement percentage.
[FIG. 19] is a graph explaining the fifth embodiment, and the graph shows a relation between a side wall inclination angle of the groove and a magnetic flux density deterioration rate.
[FIG. 20] (a) shows a captured image captured by the camera 21a, (b) shows a distribution of Re1 values based on the captured image of (a), and (c) shows a captured image captured by the camera 21b.
[FIG. 21] is a graph showing a change, due to a change in an inclination angle θ_{G}, in a Re2 value of a groove-side inclined portion in a captured image captured by the camera 21b. Here, A = 80°, θ_{L} = 50°, θ_{C1} = -50°, θ_{C2} = 30°, θ_{C1} = -θ_{L}, and θ_{C2} = A - θ_{L}.
[FIG. 22] is a diagram explaining a sixth embodiment of the present invention, and is a block diagram illustrating a schematic configuration of a determination result mapping device.
[FIG. 23] is a view explaining the sixth embodiment, and is a map in which a groove shape defective site and a protrusion remaining site are mapped over the total length of a steel sheet by the determination result mapping device.

### DESCRIPTION OF EMBODIMENTS

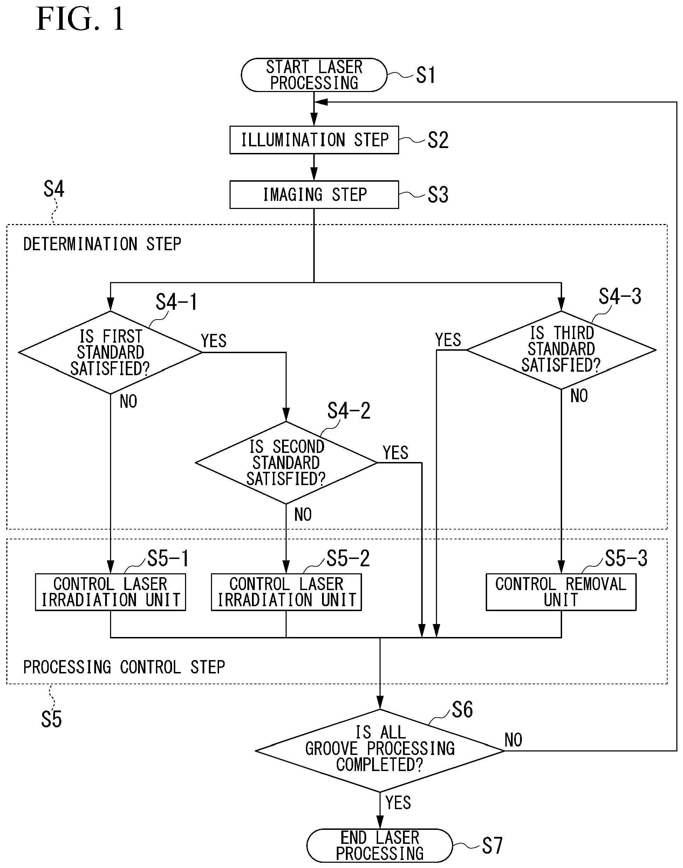

Hereinafter, each embodiment of the steel sheet processing apparatus and the method for controlling the same of the present invention will be described with reference to the drawings, and before the description, an outline of the control contents of the steel sheet processing apparatus will be described with reference to the flowchart of FIG. 1.

### (Outline of Control Contents of Steel Sheet Processing Apparatus)

The steel sheet processing apparatus of the present embodiment has a configuration described below, and processes a groove on a surface of a steel sheet passed in the sheet passing direction. In the method for controlling the steel sheet processing apparatus, a laser irradiation step (laser processing start) S1, an illumination step S2, an imaging step S3, a determination step S4, and a processing control step S5 are performed.

In the laser irradiation step S1, a surface of a steel sheet is irradiated with a laser beam from a laser irradiation unit to form the groove parallel or substantially parallel to the sheet width direction of the steel sheet.

That is, a plurality of the laser irradiation units are disposed side by side in the sheet width direction above the surface of the steel sheet passed along the sheet passing direction. The surface of the steel sheet is irradiated with a laser beam from each of the laser irradiation units to form a plurality of grooves. In plane view of the surface of the steel sheet, each groove has a straight line shape along a scanning direction parallel to the sheet width direction or intersecting the sheet width direction.

In the illumination step S2 subsequent to the laser irradiation step S1, the groove of the steel sheet is irradiated with pulsed light from an illumination unit.

That is, the pulsed light is emitted toward the groove from the illumination unit disposed downstream from the laser irradiation unit in the sheet passing direction. At this time, the pulsed light is emitted to the surface of the steel sheet so that the irradiation range includes the groove. The pulsed light as short-time high-luminance light illuminates the groove and the periphery of the groove on the surface of the steel sheet. If a protrusion is formed on the surface of the steel sheet along with the formation of the groove, the protrusion is also irradiated with the pulsed light.

In the imaging step S3 subsequent to the illumination step S2, the groove irradiated with the pulsed light is imaged by an imaging unit with an exposure time longer than an irradiation time of the pulsed light to generate a captured image.

That is, the imaging unit images the imaging range including the groove and the protrusion irradiated with the pulsed light from the laser irradiation unit. At this time, the exposure time of the imaging unit is longer than the irradiation time of the pulsed light. More specifically, the start of exposure is earlier than the start of irradiation with the pulsed light, and the end of exposure is later than the end of irradiation with the pulsed light. Thus, in a time zone in which the pulsed light is not emitted, a dark image is obtained in which nothing is imaged. Meanwhile, in a time zone in which the pulsed light is emitted, the groove and the protrusion are irradiated with the pulsed light, and thus a captured image is obtained in which the irregular shape of the groove and the protrusion is clearly shown by the intensity of the reflected light. At this time, the pulsed light is short-time high-luminance light as described above, and therefore a clear still image without blurring can be obtained as a captured image even if the passing speed of the steel sheet is high.

In the determination step S4 subsequent to the imaging step S3, a determination based on the acquired captured image is made by a determination unit. This determination is made roughly on the basis of three standards.

That is, in a step S4-1, a determination based on the captured image is made whether the groove satisfies a first standard of one or both of the depth and the width of the groove.

In a step S4-2, a determination based on the captured image is made whether the groove has a side wall having an inclination angle satisfying a second standard.

In a step S4-3, a determination based on the captured image is made whether the protrusion generated in the groove satisfies a third standard of one or both of the height and the width of the protrusion.

In the processing control step S5 subsequent to the determination step S4, the operation of the laser irradiation unit or a removal unit is controlled by a processing control unit on the basis of the results in the above steps S4-1, S4-2, and S4-3.

That is, in a case where a determination is made that the groove does not satisfy the first standard of one or both of the depth and the width of the groove in the step S4-1, the processing control unit adjusts the laser irradiation unit in the step S5-1. As a result of this adjustment, a groove newly formed after the adjustment time satisfies the first standard.

In a case where a determination is made that the inclination angle of the side wall of the groove does not satisfy the second standard in the step S4-2, the processing control unit adjusts the laser irradiation unit in the step S5-2. As a result of this adjustment, a groove newly formed after the adjustment time satisfies the second standard.

In a case where a determination is made that the protrusion generated in the groove does not satisfy the third standard of one or both of the height and the width of the protrusion in the step S4-3, the processing control unit adjusts the removal unit in the step S5-3. As a result of this adjustment, a protrusion passing through an adjustment unit after the adjustment time is appropriately removed, and as a result, the third standard is satisfied.

Note that FIG. 1 shows, as an example, a case where all of the steps S4-1, S4-2, and S4-3 are performed, but an example is not limited to such a case, and only the step S4-1 may be performed, two steps of S4-1 and S4-2 may be performed without performing the step S4-3, or only the step S4-3 may be performed. In a case where such a modification is performed in the determination step S4, the necessity of performing the steps S5-1, S5-2, and S5-3 in the processing control step S5 is also modified according to this modification.

### (First Embodiment)

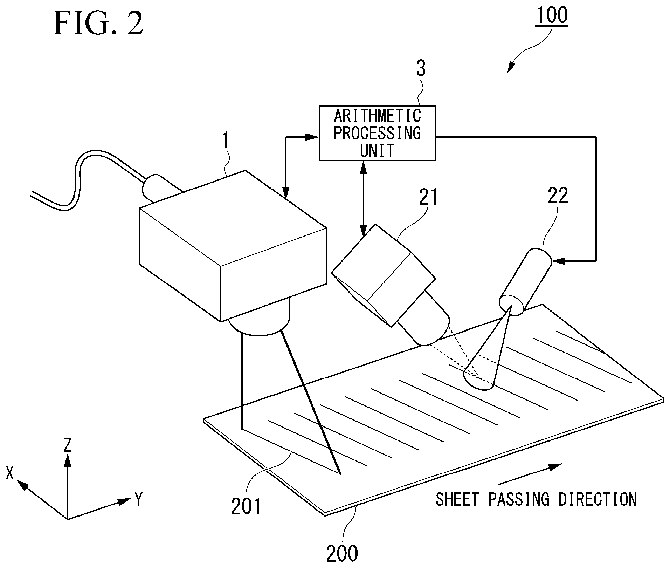

FIG. 2 is a schematic view illustrating a configuration of a steel sheet processing apparatus of a first embodiment of the present invention. A steel sheet processing apparatus 100 is an apparatus configured to process a groove on a surface of a steel sheet 200 to be passed (for example, process a groove for magnetic domain control in the case of an electrical steel sheet). Hereinafter, description is made in which the sheet width direction of the steel sheet 200 is referred to as the X-axis direction, the sheet passing direction of the steel sheet 200 is referred to as the Y-axis direction, and the normal direction (sheet thickness direction) of the surface of the steel sheet 200 is referred to as the Z-axis direction. As the steel sheet 200 in which a groove is formed by the steel sheet processing apparatus 100 according to the present embodiment, for example, various steel sheets can be used such as heat dissipation steel sheets, laminated steel sheets, electrical steel sheets, and other steel sheets.

The steel sheet processing apparatus 100 includes a laser irradiation unit 1, an imaging unit 21, an illumination unit 22, and an arithmetic processing unit 3.

The laser irradiation unit 1 emits a laser beam from a position away from the surface of the steel sheet 200 in the Z-axis direction to the surface of the steel sheet 200 passed in the Y-axis direction, for example, while focusing the laser beam into circular or elliptical spot light on the surface of the steel sheet 200, and scans the surface of the steel sheet 200 along a direction substantially parallel to the sheet width direction (X-axis direction), and thus performs groove processing for formation of a groove 201 extending in the sheet width direction of the steel sheet 200 on the surface of the steel sheet 200. Note that the extending direction of the groove 201 in plane view may be a direction intersecting the sheet width direction.

The laser irradiation unit 1 repeatedly performs groove processing on the passing steel sheet 200 at constant time intervals to form a plurality of the grooves 201 extending in the sheet width direction on the surface of the steel sheet 200 at constant distance intervals along the sheet passing direction. In the example illustrated in FIG. 2, the direction in which the laser beam is scanned (scanning direction) is a direction slightly inclined from the sheet width direction of the steel sheet 200 (direction substantially parallel to the sheet width direction of the steel sheet 200), but the scanning direction and the sheet width direction may be parallel.

The laser irradiation unit 1 includes a laser output unit (not illustrated), a laser scanning unit (not illustrated), and a laser focusing unit (not illustrated). The laser output unit outputs a laser beam transmitted from a laser light source provided outside the laser irradiation unit 1 to the laser scanning unit. The laser scanning unit is, for example, a rotating polygon mirror, and linearly scans the laser beam received from the laser output unit along a direction substantially parallel to the sheet width direction of the steel sheet 200 using the rotating polygon mirror. At this time, the laser beam output from the laser scanning unit is focused at a position on the surface of the steel sheet 200 by the laser focusing unit to increase the energy density, and becomes capable of melting and scattering the surface of the steel sheet 200. As the laser focusing unit, for example, an fθ lens can be used.

The laser irradiation unit 1 transmits a signal indicating the end of one cycle of scanning to a synchronization unit 31 described below provided in the arithmetic processing unit 3 at every end of one cycle of scanning (one cycle defined as a cycle in which the spot light of the laser beam moves from the start point to the end point of scanning while the scanning is performed, and the polygon mirror surface irradiated with the laser beam is switched to return the spot light of the laser beam to the start point of scanning again).

As the laser scanning unit, a galvanometer mirror can be used instead of the polygon mirror.

Both the imaging unit 21 and the illumination unit 22 are provided at a position away from the surface of the steel sheet 200 in the Z-axis direction downstream from the laser irradiation unit 1 in the sheet passing direction (in a downstream side in the sheet passing direction) in the Y-axis direction. The imaging unit 21 and the illumination unit 22 are provided at a position facing the groove 201 so that the groove 201 formed by the laser irradiation unit 1 is irradiated with pulsed light from the illumination unit 22 and the imaging unit 21 images the groove 201 irradiated with the pulsed light to obtain a captured image.

After the imaging unit 21 obtains the captured image of the surface of the steel sheet 200, the imaging unit 21 outputs the obtained captured image to the arithmetic processing unit 3 described below. The exposure time Ti of the imaging unit 21 can be set to be variable. The imaging unit 21 can be realized by using a charge coupled device (CCD) camera or a complementary metal-oxide-semiconductor (CMOS) camera. The imaging unit 21 may be capable of capturing a monochrome image or may be capable of capturing a color image.

The illumination unit 22 is an illumination device that irradiates the groove 201 formed by the laser irradiation unit 1 with the pulsed light. That is, the illumination unit 22 emits the pulsed light in response to passing of the steel sheet 200 at the passing timing of the groove 201 formed on the surface of the steel sheet 200.

In the present embodiment, the illumination unit 22 emits the pulsed light for an irradiation time Tp (100 [ns] in the present embodiment) using, for example, a semiconductor laser with a wavelength of 640 [nm]. The irradiation time Tp of the pulsed light is variable, and can be adjusted, for example, in a range of 30 [ns] to 1000 [ns]. As described below, the irradiation time Tp of the pulsed light is set to be shorter than the exposure time Ti of the imaging unit 21, and thus it is possible to obtain a captured image of the groove 201 formed on the steel sheet 200 passing at a high speed.

The arithmetic processing unit 3 is a functional unit that performs various arithmetic operations related to the steel sheet processing apparatus 100 and controls operations of various functional units, and is realized by, for example, a central processing unit (CPU), a read only memory (ROM), a random access memory (RAM), a communication device, and the like. The arithmetic processing unit 3 mainly performs synchronization processing among the laser irradiation unit 1, the imaging unit 21, and the illumination unit 22, quality determination processing of the groove 201 using the captured image by the imaging unit 21, and processing control by the laser irradiation unit 1 based on the quality determination result.

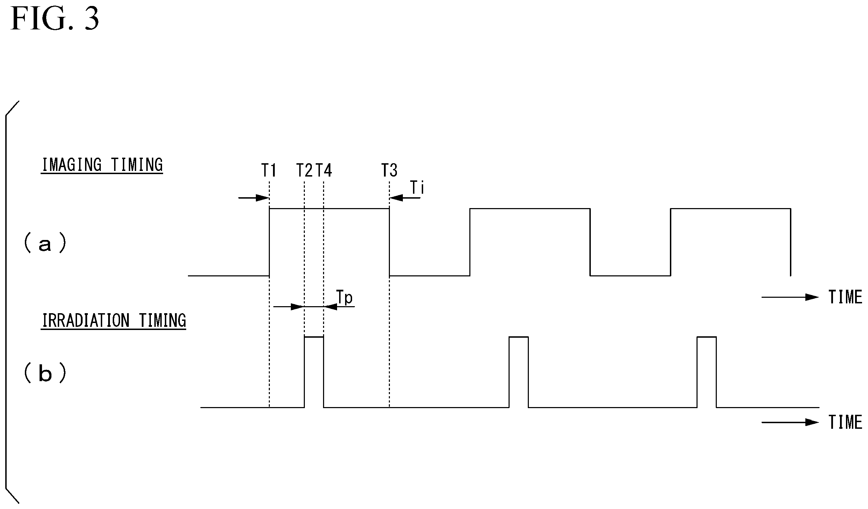

Next, the relation between the exposure time Ti by the imaging unit 21 and the irradiation time Tp of the pulsed light by the illumination unit 22 will be described with reference to FIG. 3.

FIG. 3 is a timing chart showing the relation between the exposure time Ti and the irradiation time Tp. FIG. 3(a) is a graph showing the exposure time Ti of the imaging unit 21 and the start and the end timings of the exposure time Ti (imaging timing), and FIG. 3(b) is a graph showing the irradiation time (pulse width) Tp of the pulsed light by the illumination unit 22 and the start and the end timings of the irradiation time Tp (irradiation timing).

As shown in FIG. 3(a), the exposure time Ti of the imaging unit 21 is a time from a rise at the start timing (exposure start timing (T1)) to a fall at the end timing (exposure end timing (T3)). As shown in FIG. 3(b), the irradiation time Tp of the pulsed light is a time from a rise at the irradiation start timing (irradiation start timing (T2)) to a fall at the irradiation end timing (irradiation end timing (T4)). As shown in FIG. 3, the exposure time Ti of the imaging unit 21 is longer than the irradiation time Tp of the pulsed light.

Thus, the imaging unit 21 images the groove 201 irradiated with the pulsed light with an exposure time longer than the irradiation time of the pulsed light. As a result, in a dark manufacturing line for groove processing in a magnetic domain control process of an electrical steel sheet, the imaging unit 21 opens the shutter for a long time, but no image is acquired in this case because the luminance of the surroundings is low, and meanwhile, an image is acquired only at a timing when the pulsed light is emitted to increase the luminance of the surroundings instantaneously. Thus, a captured image is generated by imaging the groove 201 formed on the steel sheet 200 substantially at a timing when the pulsed light is emitted from the illumination unit 22.

Detailed control of the illumination unit 22 is as follows. At the time T2, the illumination unit 22 emits the pulsed light at a timing when the groove 201 formed on the steel sheet 200 passes through an imaging position of the imaging unit 21 in synchronization with the imaging unit 21 on the basis of a signal that is received from the synchronization unit 31 described below and indicates the timing when the groove 201 formed on the passing steel sheet 200 reaches the imaging position of the imaging unit 21.

As a result, the illumination unit 22 can emit the pulsed light at a constant repetition period coinciding with the timing when, during sheet passing, each of the grooves 201 formed at constant distance intervals along the sheet passing direction of the surface of the steel sheet 200 passes through a substantial center of the imaging visual field of the imaging unit 21.

The Formula 4 described below represents the movement distance Lp [m] of the groove 201 moving in the sheet passing direction at a sheet passing speed of VL [m/s] during the irradiation time Tp of the pulsed light. The movement distance Lp affects blurring of an image captured as a still image of the groove 201, and therefore the movement distance Lp is preferably as shorter as possible than the groove width. Therefore, the irradiation time Tp [s] of the pulsed light is appropriately adjusted in consideration of the sheet passing speed VL and the groove width of the groove 201 to be imaged. $Lp = VL \times Tp$ (Formula 4)

In the present embodiment, for example, if the formed groove has a width of 50 to 100 [µm], the movement distance Lp is preferably 1 [µm] or less, and if the sheet passing speed VL of the steel sheet 200 is 2 [m/s], the irradiation time Tp of the pulsed light is preferably 500 [ns] or less. In the present embodiment, the irradiation time Tp of the pulsed light is set to 100 [ns].

Note that the quality determination of the groove 201 using a captured image described below is performed by comparing a case where the surroundings are dim with a case where the surroundings are bright with pulsed light. Determination of brightness, that is, the degree of brightness determined to be bright or dark in this determination processing can be appropriately changed by adjusting the sensitivity of the imaging unit 21. Furthermore, for clearer imaging with the pulsed light, the luminance of the surroundings other than the pulsed light may be intentionally lowered.

Detailed control of the imaging unit 21 is as follows. At the time T1, the imaging unit 21 performs imaging at a timing when the groove 201 formed on the steel sheet 200 passes through an imaging position of the imaging unit 21 (in synchronization with the illumination unit 22) (more specifically, performs imaging so that the range of the exposure time includes the timing when the groove 201 formed on the steel sheet 200 passes the imaging position of the imaging unit 21) on the basis of a signal that is received from the synchronization unit 31 described below and indicates the timing when the groove 201 formed on the passing steel sheet 200 reaches the imaging position of the imaging unit 21, and thus a captured image is generated. As a result, the illumination unit 22 emits spot light at the timing, included in the exposure time of the imaging unit 21, when the groove 201 passes through a substantial center of the imaging visual field of the imaging unit 21, and thus the groove 201 formed on the steel sheet 200 can be imaged at a substantial center position of a captured image of the imaging unit 21.

The imaging unit 21 preferably has a configuration capable of continuously capturing 1000 or more still images per second. The repetition frequency F [Hz] of imaging in the imaging unit 21 can be obtained by Formula 5 described below in which PL [mm] represents the groove formation pitch and VL represents the sheet passing speed of the steel sheet 200. $F = VL / PL \left[kHz\right]$ (Formula 5)

In the present embodiment, for example, if the sheet passing speed VL of the steel sheet 200 is 2 [m/s] and the groove formation pitch PL is 3 [mm], the imaging frequency is about 667 [Hz]. Therefore, about 667 of the grooves 201 in total pass through the imaging range of the imaging unit 21 in 1 second. However, the imaging unit 21 can continuously capture 1000 or more still images in 1 second, and therefore all the grooves 201 passing through the imaging range can be imaged. In a case where the sheet passing speed VL of the steel sheet 200 is large, an imaging unit 21 is used that is capable of capturing a larger number of images in 1 second. Furthermore, the imaging unit 21 may have an optical telephoto function, and in the present embodiment, one having a telephoto function of an optical magnification of up to 50 times is used. If the sheet passing speed VL of the steel sheet 200 is 2 [m/s], the movement distance of the groove 201 within the irradiation time Tp of the pulsed light (100 [ns]) is 0.2 [µm]. The movement distance of 0.2 [µm] is sufficiently small with respect to the groove width of about 50 [µm], and therefore even if the groove 201 having a minute groove width of about 50 [µm] is passed at a high speed, the groove 201 can be clearly observed as a still image.

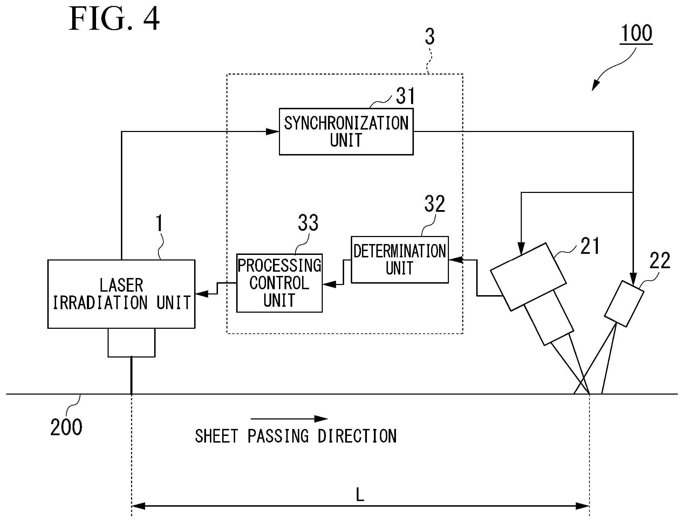

FIG. 4 is a block diagram illustrating a configuration of the steel sheet processing apparatus 100 illustrated in FIG. 2. As illustrated in FIG. 4, the arithmetic processing unit 3 includes the synchronization unit 31, a determination unit 32, and a processing control unit 33.

The synchronization unit 31 is connected to the laser irradiation unit 1, the imaging unit 21, and the illumination unit 22, and receives a signal indicating the end of one cycle of scanning from the laser irradiation unit 1. The synchronization unit 31 outputs a signal indicating the end of one cycle of scanning to the imaging unit 21 and the illumination unit 22 to synchronize the imaging timing in the imaging unit 21 and the irradiation timing of the pulsed light by the illumination unit 22 with the timing when the formed groove 201 passes through the imaging position, and thus the pulsed light is emitted from the illumination unit 22 at the timing when the groove 201 formed on the steel sheet 200 passes through the imaging position of the imaging unit 21 to enable the imaging unit 21 to image the groove 201.

The synchronization unit 31 obtains a cycle of scanning for formation of the groove 201 by the laser irradiation unit 1 by using an encoder (rotation position detector) of a motor of the polygon mirror as a laser scanning unit of the laser irradiation unit 1. The synchronization unit 31 calculates the timing when the groove 201 formed on the passing steel sheet 200 reaches the imaging position of the imaging unit 21 on the basis of the sheet passing speed of the steel sheet 200 and the timing of the end of one cycle of scanning, and then outputs a signal indicating the timing when the groove 201 formed on the steel sheet 200 reaches the imaging position of the imaging unit 21 to the imaging unit 21 and the illumination unit 22.

In a case where a galvanometer mirror is used as a laser scanning unit instead of the polygon mirror, the timing of the end of one cycle can be obtained by detecting the rotation angle of the galvanometer motor by the rotation position detector.

The synchronization unit 31 synchronizes the imaging timing of the imaging unit 21 with the irradiation timing of the illumination unit 22 so that the exposure time Ti in the imaging unit 21 and the irradiation time Tp of the pulsed light in the illumination unit 22 temporally overlap with each other. As described above, the exposure time is longer than the irradiation time of the illumination unit 22 (Ti > Tp), and therefore the imaging unit 21 can image the groove 201 of the steel sheet 200 only during the irradiation time of the pulsed light by the illumination unit 22.

The determination unit 32 is a functional unit that is connected to the imaging unit 21 and the processing control unit 33 and acquires a captured image from the imaging unit 21 and thus makes a determination based on the captured image. For example, the determination unit 32 performs luminance analysis based on the captured image and determines whether the groove 201 satisfies a predetermined standard as a standard of at least one of the depth or the width of the groove 201. That is, the determination unit 32 estimates the depth and the width of the groove 201 on the basis of the captured image generated by the imaging unit 21, and determines the quality of the groove 201 on the basis of whether the estimated depth and width satisfy predetermined standard values determined in advance as standards of the depth and the width required for a groove for magnetic domain control. Note that the determination unit 32 may estimate at least one of the depth or the width of the groove 201 and determine the quality thereof.

In a case where the groove 201 is formed on the surface of the steel sheet 200 by the laser beam, a protrusion may be generated around the groove 201 formed on the surface of the steel sheet 200 by melting and re-solidifying of the metal included in the steel sheet 200 or by fusion of the scattered melt on the surface of the steel sheet 200. If such a secondary protrusion (hereinafter, referred to as a protrusion portion) remains in the steel sheet 200, for example, in the case of forming a transformer core by laminating as in the case of an electrical steel sheet, the insulating film between the steel sheets 200 overlapping each other may be damaged to reduce the electrical insulation, and thus the performance of the transformer may deteriorate.

Therefore, the determination unit 32 may determine whether the protrusion generated in the groove 201 satisfies a predetermined standard as a standard of at least one of the height or the width of the protrusion, on the basis of the captured image. That is, the determination unit 32 performs luminance analysis based on the captured image generated by the imaging unit 21, estimates the height and the width of the protrusion generated together with the generation of the groove 201, and determines whether or not to remove the protrusion on the basis of whether the estimated height and width satisfy predetermined standard values determined in advance as standards of the height and the width of a protrusion acceptable in generation of a groove for magnetic domain control. Note that the determination unit 32 may estimate at least one of the height or the width of the protrusion and determine the quality thereof.

In the laser irradiation unit 1, the laser beam scanned and emitted to the steel sheet 200 is, for example, a continuous wave single mode fiber laser beam having a wavelength of 1.07 [µm] in the present embodiment, the laser power is 2000 [W], the scanning speed Vs is 50 [m/s], the focus shape is circular, and the focused beam diameter d is φ20 [µm]. The sheet passing speed VL of the steel sheet 200 is 2 [m/s], and the formation pitch of the groove 201 is 3 [mm]. In such a case, the determination unit 32 can determine that the predetermined standard is satisfied (that is, the processing state is favorable) in a case where the groove 201 generated in the steel sheet 200 has a depth of 20 [µm] or more and a width of 50 [µm] or less.

The processing control unit 33 is a functional unit that is connected to the laser irradiation unit 1 and the determination unit 32 and controls the operation of the laser irradiation unit 1. For example, in a case where a determination is made that the groove 201 does not satisfy the predetermined standard, the processing control unit 33 controls the laser irradiation unit 1 so that a groove 201 formed by the laser irradiation unit 1 after the determination satisfies the predetermined standard. That is, the processing control unit 33 controls the laser irradiation unit 1 on the basis of the determination result by the determination unit 32. For example, if the determination unit 32 determines that the groove 201 formed on the surface of the steel sheet 200 has a depth of less than the predetermined standard value, the processing control unit 33 controls the laser irradiation unit 1 to change the setting of the processing conditions such as the focus of the laser beam so that the groove 201 formed on the surface of the steel sheet 200 has a value equal to or greater than the predetermined standard value.

In a case where a determination is made that the protrusion generated along with the generation of the groove 201 does not satisfy the predetermined standard, the processing control unit 33 may control a removal unit to remove a protrusion generated in the groove 201 formed by the laser irradiation unit 1 after the determination. That is, the processing control unit 33 controls the removal unit described below on the basis of the determination result by the determination unit 32. For example, if the determination unit 32 determines that the protrusion generated along with the generation of the groove 201 on the surface of the steel sheet 200 has a height equal to or greater than the predetermined standard value, the processing control unit 33 controls the removal unit described below to remove the protrusion so that the protrusion generated on the surface of the steel sheet 200 has a value of less than the predetermined standard value.

Here, a case has been described in which if the determination unit 32 determines that the groove 201 formed on the surface of the steel sheet 200 has a depth of less than the predetermined standard value, the laser irradiation unit 1 is controlled so that the groove 201 formed on the surface of the steel sheet 200 has a value equal to or greater than the predetermined standard value. However, the present invention is not limited to such a case, and the scanning and emitting of the laser beam from the laser irradiation unit 1 may be stopped, or the steel sheet processing apparatus 100 itself may be stopped.

Next, a description will be made about an estimation method of imaging the groove 201 formed in the steel sheet 200 by the imaging unit 21, performing luminance analysis on the obtained captured image, and estimating the quality of the groove 201, and a method of determining whether the groove 201 is a favorable groove 201 satisfying the predetermined standard value by using the estimation result.

Note that, in the arithmetic processing unit 3 according to the present embodiment, the determination unit 32 performs luminance analysis in the captured image captured by the imaging unit 21, and the quality of the groove 201 is determined, and in addition, the quality of the groove 201 can also be determined by determining whether the protrusion portion satisfies the predetermined standard.

FIGS. 5(a), 5(b), and 5(c) are views schematically illustrating an observation state of the groove 201. FIG. 5(a) is a schematic view for explanation of positional relations of the imaging unit 21 and the illumination unit 22 to the groove 201 of the steel sheet 200. FIG. 5(a) is a sectional view in the sheet thickness direction as viewed along the sheet passing direction. The upper view of FIG. 5(b) is a view illustrating a sectional configuration when a deep groove 201 having a depth equal to or greater than the standard value is formed on the surface of the steel sheet 200, and is a sectional view in the sheet thickness direction as viewed along the sheet passing direction. The lower view of FIG. 5(b) is a view schematically illustrating a captured image obtained by capturing the upper view of FIG. 5(b) in plane view. The upper view of FIG. 5(c) is a view illustrating a sectional configuration when a shallow groove 201 having a depth of less than the standard value is formed on the surface of the steel sheet 200, and is a sectional view in the sheet thickness direction as viewed along the sheet passing direction. The lower view of FIG. 5(c) is a view schematically illustrating a captured image obtained by capturing the upper view of FIG. 5(c) in plane view. In FIGS. 5(a), 5(b), and 5(c), the direction from the left to the right in each drawing is the sheet passing direction (Y-axis direction), and the direction from the bottom to the top in each drawing is the Z-axis direction as the normal direction with respect to the steel sheet 200. The direction from the front to the back of the paper surface is the sheet width direction (X-axis direction).

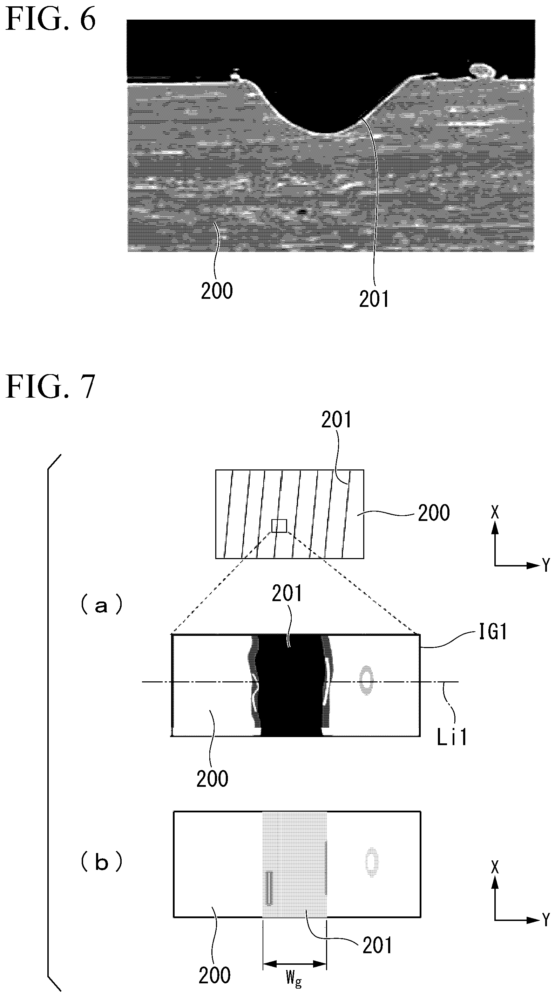

FIG. 6 shows a sectional photograph corresponding to the schematic views shown as the upper view of FIG. 5(b) and the upper view of FIG. 5(c). The sectional photograph shown in FIG. 6 shows the groove 201 formed on the surface of the steel sheet 200. Furthermore, the protrusion generated when the groove 201 is formed by irradiation with the laser beam is also shown on the sheet surface on the right side of the paper surface.

As illustrated in FIG. 5(a), the imaging unit 21 is disposed so that the optical axis of the imaging unit 21 intersects the steel sheet 200 at a point P on the surface of the steel sheet 200, and is in the specular reflection direction with respect to the central axis in the irradiation direction of the pulsed light emitted from the illumination unit 22. That is, the imaging unit 21 is disposed so that the optical axis of the imaging unit 21 and the irradiation direction of the pulsed light emitted from the illumination unit 22 form a predetermined angle θ with respect to the Z-axis direction as viewed from the X-axis direction.

In order to determine the depth of the groove 201 formed on the surface of the steel sheet 200 as described below, the imaging angle of the imaging unit 21 for the surface of the steel sheet 200 and the irradiation angle of the pulsed light of the illumination unit 22 for the surface of the steel sheet 200 as the predetermined angle θ are preferably 5 degrees or more and 70 degrees or less, and more preferably 20 degrees or more and 50 degrees or less with respect to the normal direction of the surface of the steel sheet 200.

As a result, as illustrated in FIG. 5(b), in a case where the groove 201 is the deep groove 201 having a depth equal to or greater than the standard value, most of the reflected light of the pulsed light reflected by the inner surface of the groove 201 is not directed to the imaging unit 21, so that when the groove 201 is imaged by the imaging unit 21, the portion of the groove 201 becomes dark in the captured image. Meanwhile, as illustrated in FIG. 5(c), in a case where the groove 201 is the shallow groove 201 having a depth of less than the standard value, most of the reflected light of the pulsed light reflected by the inner surface of the groove 201 is directed to the imaging unit 21, so that when the groove 201 is imaged by the imaging unit 21, the portion of the groove 201 becomes bright in the captured image. Thus, the depth and the width of the groove 201 can be estimated using such a difference in luminance (brightness) in the captured image.

As described above, the determination unit 32 performs luminance analysis on the captured image. That is, the determination unit 32 determines that a dark continuous belt-shaped portion in the captured image is the groove 201, and determines that a portion having a high luminance around the belt-shaped portion is a protrusion portion. In the captured image, a lump of a molten metal generated in the groove 201 appears so that portions having a high luminance are arranged in a row along the groove 201. Therefore, the determination unit 32 performs luminance analysis using characteristics of luminance appearing in such a captured image, estimates the presence or absence of a lump of a molten metal in the groove 201, and determines the quality of the groove 201. Hereinafter, detailed processing of luminance analysis by the determination unit 32 will be described with reference to FIGS. 7 to 10.

First, an example in which a favorable groove 201 is formed on the surface of the steel sheet 200 will be described. Here, the standard value as a predetermined standard of the depth of a favorable groove 201 is set to 20 [µm] or more, and a groove 201 having a depth of 20 [µm] or more is determined to be a groove 201 having a favorable depth. The upper portion of FIG. 7(a) shows a schematic view schematically illustrating the surface of the steel sheet 200 in which a favorable groove 201 having a depth of 25 [µm] is formed. The lower portion of FIG. 7(a) illustrates a captured image IG1 obtained when the illumination unit 22 emits the pulsed light to the region where the favorable groove 201 is formed in the surface of the steel sheet 200 illustrated in the upper portion and the imaging unit 21 images the groove 201 irradiated with the pulsed light. FIG. 7(b) is a schematic view showing the width of the groove 201 (also simply referred to as the groove width) Wg obtained from the captured image 1G1 illustrated in FIG. 7(a). In FIGS. 7(a) and 7(b), the vertical direction is the X-axis direction, and the horizontal direction is the Y-axis direction.

As shown in FIGS. 7(a) and 7(b), the quality of the depth of the groove 201 formed in the steel sheet 200 is determined by luminance analysis by the determination unit 32 using the captured image of the groove 201 imaged at the timing of irradiation with the pulsed light. The position, the shape, and the groove width Wg of the groove 201 are estimated on the basis of the brightness in the captured image, and a determination is made on the basis of the obtained estimation result.

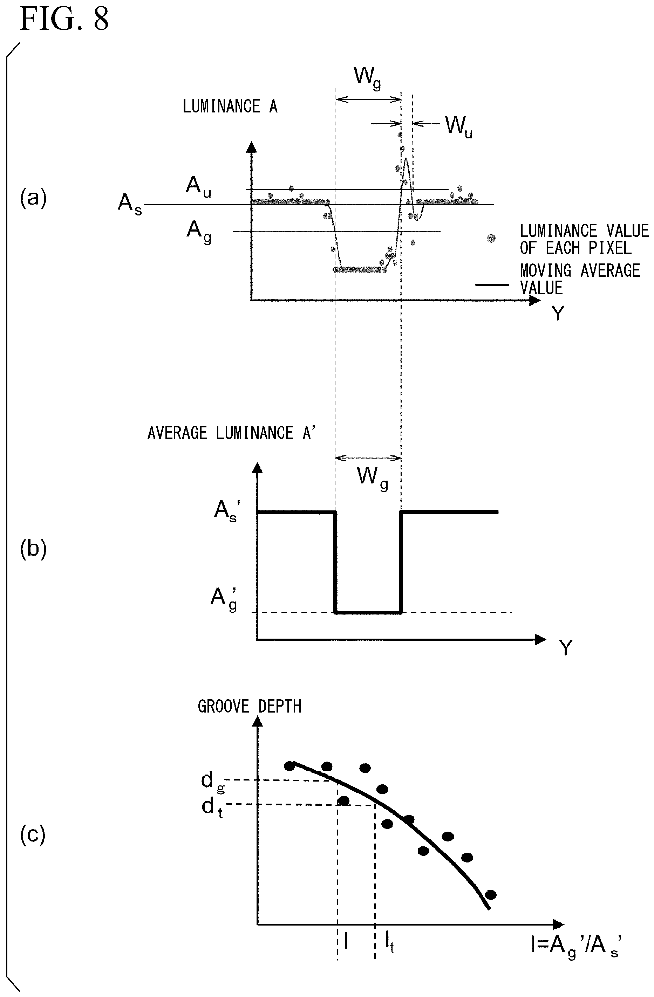

FIG. 8(a) shows a measurement result obtained by measuring the luminance A at a part along the white dotted line Li1 extending in the Y-axis direction shown in the captured image IG1 of FIG. 7(a). The horizontal axis indicates the position in the Y-axis direction, and the vertical axis indicates the luminance A. FIG. 8(a) further shows the moving average value of the luminance A with a solid line.

Here, in the captured image IG1, in the surface of the steel sheet 200, an unprocessed portion where the groove 201 is not formed has a relatively high luminance due to specular reflection of the pulsed light, while a groove-processed portion where the groove 201 is formed has a relatively low luminance due to small reflection of the pulsed light. In the captured image IG1, a protrusion portion formed, for example, in the periphery of the groove 201 appears with a higher luminance due to high surface glossiness. Therefore, the determination unit 32 determines the surface on which the groove 201 is not formed, the groove 201, and the protrusion portion in the steel sheet 200 as follows.

First, the determination unit 32 estimates a portion having a value of change in luminance of 10% or less as the sheet surface (unprocessed portion) over a distance (for example, 200 [µm]) sufficiently longer than the designed absolute maximum value (for example, 100 [µm]) of the groove width, and sets the luminance average as the luminance of sheet surface As. In FIG. 8(a), portions from the left and right end portions toward the central side are estimated as an unprocessed portion, and the average value of the portions is the luminance of sheet surface As.

Then, the determination unit 32 regards the luminance of a value lower than the luminance of sheet surface As by a predetermined rate (for example, 0.7 times or less) as the groove determination threshold luminance Ag. The determination unit 32 estimates that the groove 201 is formed in a range where the luminance is equal to or less than the groove determination threshold luminance Ag. FIG. 8(a) shows the width of the groove 201 as the groove width Wg.

Furthermore, the determination unit 32 regards the luminance of a value higher than the luminance of sheet surface As by a predetermined rate (for example, 1.2 times or more) as the threshold luminance of upheaval determination Au. The determination unit 32 estimates that the protrusion portion is formed in a range where the luminance is equal to or greater than the threshold luminance of upheaval determination Au. FIG. 8(a) shows the width of the protrusion portion as the protrusion width Wu.

As described above, the determination unit 32 performs luminance analysis along the Y-axis direction at a predetermined position in the X-axis direction of the captured image of the imaging unit 21, and thus can estimate the positions of the surface of the unprocessed portion, the groove 201, and the protrusion portion in the steel sheet 200. The rates of the groove determination threshold luminance Ag and the threshold luminance of upheaval determination Au with respect to the luminance of sheet surface As may be appropriately changed according to the sensitivity of the imaging unit 21 or the irradiation intensity of the pulsed light of the illumination unit 22.

Here, in the groove 201 on which the luminance analysis is performed, a shallow portion may be present, and in this case, the luminance of the groove 201 portion calculated on the basis of the captured image is not a constant value but varies. Therefore, the determination unit 32 performs luminance analysis along the Y-axis direction at a plurality of positions in the X-axis direction of the captured image IG1, and obtains the average luminance A' of the luminance analysis results obtained at a plurality of positions in the X-axis direction for each position in the Y-axis direction. Then, the determination unit 32 determines that the groove 201 is provided at a location where the average luminance A' obtained for each position in the Y-axis direction is less than the groove determination threshold luminance Ag. In the determination of the presence or absence of the protrusion portion, the protrusion portion is generated at a limited location in the X-axis direction, and therefore the average value of the luminance is not calculated from the luminance obtained at a plurality of positions in the X-axis direction for each position in the Y-axis direction.

FIG. 8(b) shows the average luminance A' obtained by averaging the luminance obtained along the Y-axis direction for each of the plurality of positions in the X-axis direction for each of the positions in the Y-axis direction. FIG. 8(b) further shows the position of the groove 201 in the Y-axis direction and the groove width Wg in the Y-axis direction obtained on the basis of the luminance analysis results. The determination unit 32 determines that the width of the groove 201 is favorable if the groove width Wg is, for example, within ±10% from the standard value of the groove width (for example, 50 [µm]). The position and the groove width Wg of the groove 201 in the Y-axis direction shown in FIG. 8(b) correspond to those in FIG. 7(b).

The determination unit 32 further obtains the average value Ag' of the luminance in the groove width Wg and the average value As' of the luminance of the unprocessed portion where the groove 201 is not formed (hereinafter, simply referred to as the portion other than the groove 201) on the surface of the steel sheet 200. Thus, the determination unit 32 can specify the groove 201 and the portion other than the groove 201 based on the change in the luminance distribution in the sheet width direction of the steel sheet 200 in the captured image. The determination unit 32 obtains the luminance ratio I (Ag'/As') as the proportion of the average value Ag' of the luminance in the groove width Wg to the average value As' of the luminance of the portion other than the groove 201.

FIG. 8(c) is a graph showing the relation between the groove depth dg and the luminance ratio I, with the horizontal axis indicating the luminance ratio I and the vertical axis indicating the groove depth dg. FIG. 8(c) shows the correlation between the groove depth dg acquired in advance and the luminance ratio I with a solid line. The deeper the groove 201 is, the lower the luminance in the captured image becomes, and the lower the luminance ratio I of Ag' to As' becomes. Therefore, the groove depth dg can be determined to be large (deep) in a case where the luminance ratio I is low, and small (shallow) in a case where the luminance ratio I is high (I is close to 1).

FIG. 8(c) shows the luminance ratio corresponding to the groove depth dt that is the standard value (for example, 20 [µm]), as the threshold luminance ratio It. The determination unit 32 compares the luminance ratio I obtained from the captured image with the threshold luminance ratio It. As shown in this example, in a case where the luminance ratio I is lower than the threshold luminance ratio It, the groove depth dg of the groove 201 is larger (deeper) than the desired groove depth dt, and therefore it can be determined that a groove 201 having a favorable depth is formed.

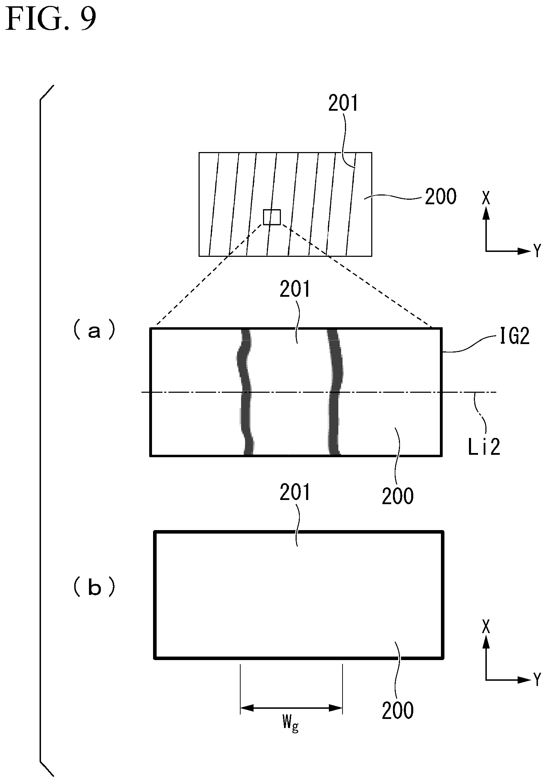

Next, an example in which an unfavorable groove 201 is formed on the surface of the steel sheet 200 will be described. The upper portion of FIG. 9(a) shows a schematic view schematically illustrating the surface of the steel sheet 200 in which a groove 201 having an unfavorable depth of 15 [µm], which is less than 20 [µm] as the standard value, is formed. The lower portion of FIG. 9(a) illustrates a captured image IG2 obtained when the illumination unit 22 emits the pulsed light to the region where the unfavorable groove 201 is formed in the surface of the steel sheet 200 illustrated in the upper portion and the imaging unit 21 images the groove 201 irradiated with the pulsed light.

FIG. 9(b) is a schematic view showing the width of the groove 201 (groove width) Wg obtained from the captured image IG2 illustrated in FIG. 9(a). In FIGS. 9(a) and 9(b), the vertical direction is the X-axis direction, and the horizontal direction is the Y-axis direction, as in FIGS. 7(a) and 7(b).

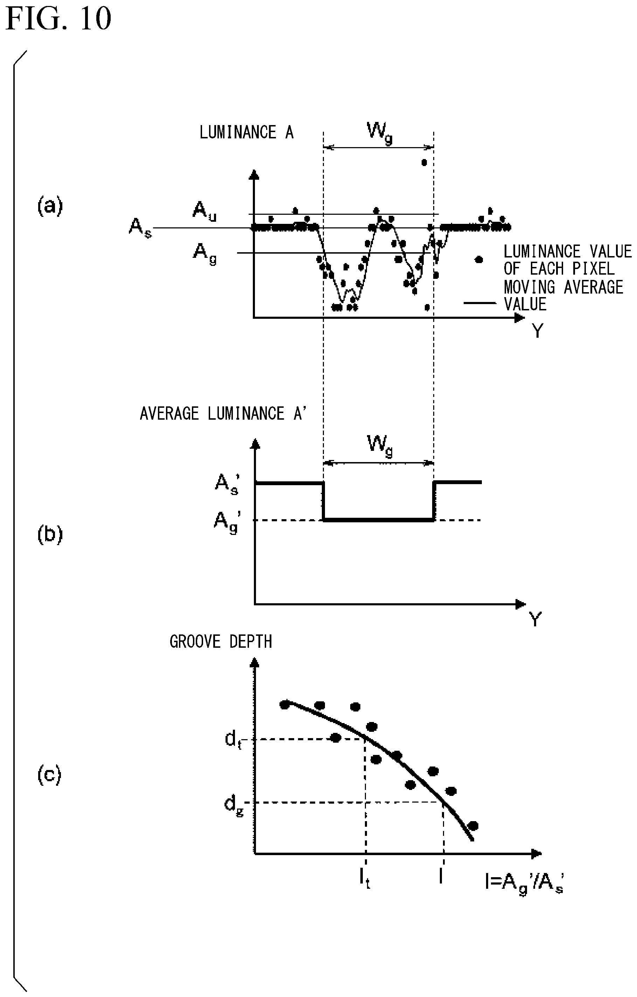

FIG. 10(a) shows a measurement result obtained by measuring the luminance A at a part along the dotted line Li2 extending in the Y-axis direction shown in the captured image IG2 of FIG. 9(a). The horizontal axis indicates the position in the Y-axis direction, and the vertical axis indicates the luminance A. FIG. 10(a), like FIG. 8(a), shows the moving average value of the luminance A with a solid line.

The determination unit 32 performs luminance analysis on the basis of the captured image IG2 to obtain the luminance of sheet surface As, the groove determination threshold luminance Ag, and the luminance of sheet surface As, and then compares each luminance with the luminance in the captured image IG2 to determine the surface of the steel sheet 200, the groove 201, and the protrusion portion. In this example, the groove depth dg of the groove 201 is shallower and the groove width Wg is wider than in the above-described example of FIGS. 7 and 8, and a protrusion portion is not formed.

FIG. 10(b) shows the average luminance A' obtained in the captured image IG2 by averaging the luminance obtained along the Y-axis direction for each of a plurality of positions in the X-axis direction for each position in the Y-axis direction. As shown in FIG. 10(b), the determination unit 32 calculates the average value Ag' of the luminance in the groove width Wg and the average value As' of the luminance of the portion other than the groove 201 on the basis of the average luminance A' obtained by averaging for each position in the Y axis direction as described above. Since the groove 201 is relatively shallow, the average value Ag' of the luminance in the groove width Wg is lower than the average value Ag' in the favorable example of FIG. 8(b). The determination unit 32 obtains the luminance ratio I using the average value Ag' of the luminance in the groove width Wg and the average value As' of the luminance of the portion other than the groove 201.

As shown in FIG. 8(c), in comparison between the luminance ratio I and the threshold luminance ratio It, the luminance ratio I is larger than the threshold luminance ratio It. Therefore, the determination unit 32 estimates that the groove depth dg of the groove 201 is smaller (shallower) than the desired groove depth dt, and determines that a groove 201 having a favorable depth cannot be formed.

The determination unit 32 performs such image analysis, and thus can determine the quality of the depth and the width of the groove 201 formed by the laser irradiation unit 1. Furthermore, as shown in the upper portion of FIG. 8(a), the determination unit 32 can also specify the position where the protrusion portion is formed on the steel sheet 200 and the size of the protrusion portion (protrusion width Wu).

When the processing control unit 33 receives the determination result that the depth and the width of the groove 201 formed on the surface of the steel sheet 200 do not satisfy the standard values from the determination unit 32, the processing control unit 33 controls the laser irradiation unit 1 to change the setting of the processing conditions of the laser irradiation unit 1 on the basis of the determination result so that the depth and the width of the groove 201 satisfy the standard values. When the processing control unit 33 receives the determination result that a protrusion portion having a height of more than the standard value is generated in the steel sheet 200 from the determination unit 32, the processing control unit 33 controls the laser irradiation unit 1 to change the setting of the processing conditions of the laser irradiation unit 1 on the basis of the determination result so that a protrusion portion is not generated in the groove 201. For example, the processing control unit 33 sends a vertical movement control signal to a drive unit that moves the fθ lens as a focusing element vertically in the laser irradiation unit 1, moves the focus vertically, determines the groove depth in each movement, and performs focus adjustment until the conditions are normalized.

With such a configuration of the first embodiment, in the steel sheet processing apparatus 100, the synchronization unit 31 synchronizes the imaging timing when the imaging unit 21 images the groove 201 with the irradiation timing of the pulsed light by the illumination unit 22, and thus the imaging unit 21 can image the groove 201 on the surface of the steel sheet 200 conveyed at a predetermined sheet passing speed. Thus, the steel sheet processing apparatus 100 can determine whether the depth of the groove 201 formed in the steel sheet 200 satisfies the standard value, while conveying the steel sheet 200 at a predetermined sheet passing speed, using the captured image by the imaging unit 21 without using a sensor or the like that measures a leakage magnetic flux as in the related art. As a result, even in a case where the steel sheet 200 is passed at a high speed to form the groove 201, a captured image can be reliably obtained in which the groove 201 is clearly imaged.

Furthermore, the processing control unit 33 controls the laser irradiation unit 1 so that a groove 201 having a depth and a width that satisfy predetermined standards is formed on the basis of the determination result of the determination unit 32. As a result, a steel sheet 200 in a favorable processing state can be stably obtained while the steel sheet is conveyed at a predetermined sheet passing speed. Furthermore, a captured image at the time when the groove 201 is formed can be acquired, and therefore the quality control of the steel sheet 200 becomes easy.

### (Second Embodiment)

In a second embodiment, an example in which a removal unit configured to remove a protrusion portion is further provided will be described. The second embodiment is the same as the above-described first embodiment in a point that the processing control unit 33 controls the laser irradiation unit 1 on the basis of the determination result of the determination unit 32 so that the groove 201 having a depth and a width satisfying predetermined standards is formed on the surface of the steel sheet 200, and therefore the description of the point will be omitted here, and the following description will be given focusing on differences from the first embodiment.

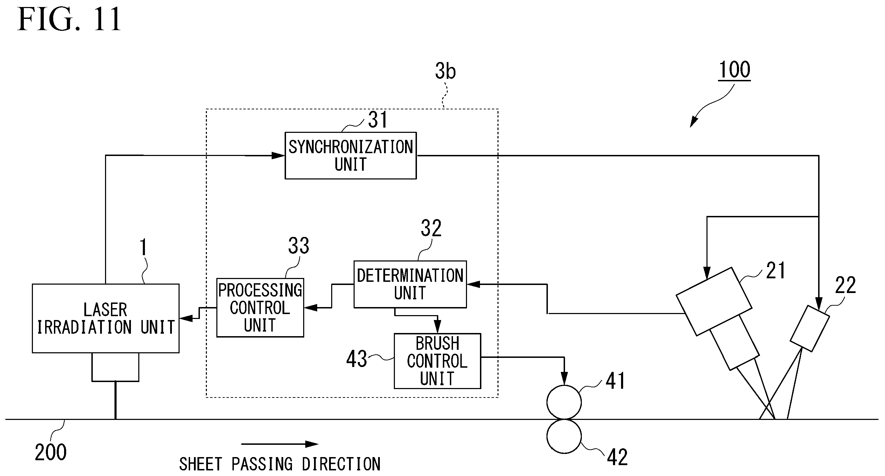

FIG. 11 is a block diagram illustrating a configuration of a steel sheet processing apparatus 100 of the second embodiment. The removal unit is a functional unit having a function of removing a protrusion generated in the groove 201, and in the present embodiment, for example, a brush roll 41 and a support roll 42 are provided as the removal unit.

The present embodiment is different from the first embodiment illustrated in FIG. 2 in a point that a brush control unit 43 is provided in an arithmetic processing unit 3b, and the brush roll 41 and the support roll 42 that cooperate with the brush control unit 43 are provided, as a removal unit.

As illustrated in FIG. 11, in the steel sheet processing apparatus 100 according to the second embodiment, the brush roll 41 and the support roll 42 are disposed downstream from the laser irradiation unit 1 in the sheet passing direction, and are disposed upstream from the imaging position of the imaging unit 21 in the sheet passing direction.

The brush roll 41 is disposed to face the support roll 42, and the steel sheet 200 is passed between the brush roll 41 and the support roll 42. The brush roll 41 is provided on the surface side, of the steel sheet 200, that is irradiated with a laser beam from the laser irradiation unit 1 to form the groove 201. The brush roll 41 rotates when the steel sheet 200 passes between the brush roll 41 and the support roll 42, and removes the protrusion portion formed on the surface of the steel sheet 200 with a brush (not illustrated) provided on the outer circumferential surface.

The brush roll 41 is configured to move vertically, that is, in the normal direction of the surface of the steel sheet 200 so that the position in the normal direction can be controlled by the brush control unit 43. The brush roll 41 is configured so that the rotation speed of the brush roll 41 can be controlled by the brush control unit 43. When the brush roll 41 is moved in a direction for approach to the surface of the steel sheet 200 under the control by the brush control unit 43, a large number of protrusion portions can be removed by the brush provided on the outer circumferential surface, but if the brush roll 41 is too close to the surface of the steel sheet 200, the steel sheet 200 may be unintentionally damaged. Therefore, the brush control unit 43 needs to control the position of the brush roll 41 so that the brush roll 41 sufficiently removes the protrusion portion formed on the surface of the steel sheet 200 and rotation of the brush roll 41 does not damage the surface of the steel sheet 200, the groove 201, and the like.

Here, the protrusion portion formed on the surface of the steel sheet 200 is formed at a specific position on the surface of the steel sheet 200, unlike the groove 201 formed along the sheet width direction (Y-axis direction). Therefore, in determination of the protrusion portion by the determination unit 32, the protrusion portion is detected with the luminance analysis result along the Y axis at a certain position of the X axis without using the average value of the luminance analysis results at a plurality of positions of the X axis in the captured image for each position of the Y axis as in the determination of the groove 201.

Specifically, according to the example shown in the upper view of FIG. 8, the determination unit 32 performs luminance analysis along the sheet passing direction (Y-axis direction) at a predetermined position in the sheet width direction (X-axis direction) in the captured image, and determines that the protrusion portion is formed in a range where the luminance is equal to or greater than the threshold luminance of upheaval determination Au. Then, the determination unit 32 obtains the width in the sheet passing direction of the protrusion portion determined on the basis of the captured image as the protrusion width Wu on the basis of the range where the luminance is equal to or greater than the threshold luminance of upheaval determination Au. Furthermore, the determination unit 32 obtains the average luminance Au' in the protrusion width Wu on the basis of the captured image, and calculates the average value As' of the luminance of the surface of the steel sheet 200 on the basis of the luminance of the surface of the steel sheet 200 at a position other than the protrusion width Wu and the groove width Wg.

Then, the determination unit 32 obtains the luminance ratio I = Au'/As' as the proportion of the average luminance Au' in the protrusion width Wu to the average value As' of the luminance of the surface of the steel sheet 200. The determination unit 32 stores reference information indicating the correlation between the height of a protrusion portion and the luminance ratio I in advance, and can obtain the height of the protrusion portion using the correlation indicated by the reference information and the calculated luminance ratio I.

When the determination unit 32 determines that the height of the protrusion portion does not satisfy the standard value (is higher than the standard value), the brush control unit 43 determines that the protrusion portion is not sufficiently removed by the brush roll 41, and controls the brush roll 41 and moves the brush roll 41 in a direction for approach to the support roll 42. As a result, the brush roll 41 approaches the surface of the steel sheet 200 to increase the amount of the removed protrusion portion, and thus the protrusion portion formed in the steel sheet 200 can be reduced.

As described above, in the steel sheet processing apparatus 100 according to the second embodiment, the determination unit 32 can directly determine whether the height of the protrusion portion, in addition to the groove 201 formed in the steel sheet 200, satisfies the standard value. Furthermore, the steel sheet processing apparatus 100 according to the second embodiment is configured so that the brush control unit 43 in addition to the processing control unit 33 can be controlled on the basis of the result of the determination unit 32, and therefore a favorable groove can be formed and generation of a protrusion portion not satisfying the standard can be suppressed in the steel sheet 200, and accordingly, a steel sheet 200 in a more favorable processing state can be stably obtained.

### (Third Embodiment)

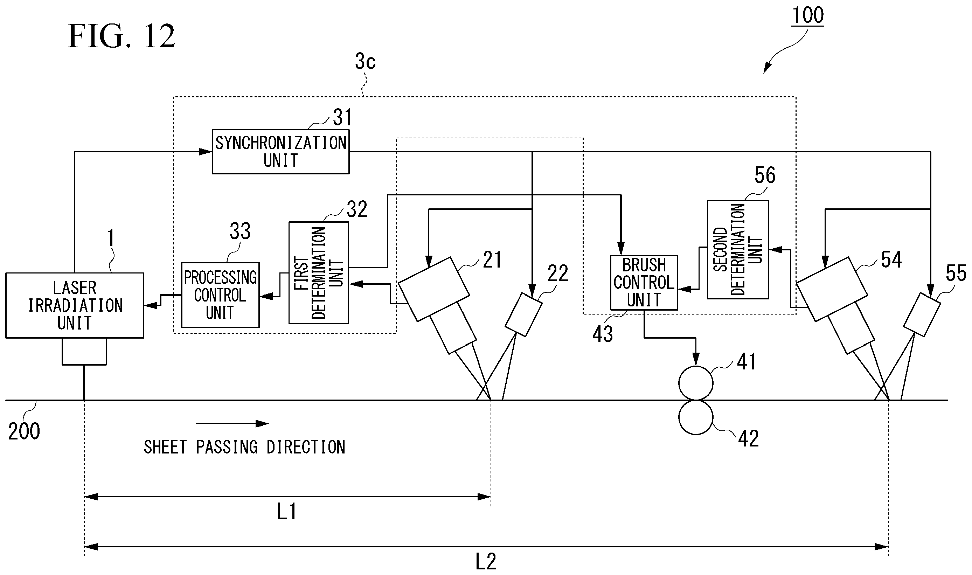

In the second embodiment above, a case is described in which the state of the groove 201 and the protrusion portion on the surface of the steel sheet 200 is determined on the basis of the captured image generated by one imaging unit 21, and the laser irradiation unit 1 and the brush roll 41 are controlled on the basis of the obtained determination result. However, the present invention is not limited to this case. For example, as illustrated in FIG. 12, the steel sheet processing apparatus 100 according to the third embodiment may be provided with, in addition to an imaging unit 21 and an illumination unit 22 that acquire a captured image for control of a laser irradiation unit 1, an imaging unit 54 and an illumination unit 55 that acquire a captured image for control of a brush roll 41.

As illustrated in FIG. 12, the steel sheet processing apparatus 100 according to the third embodiment includes an arithmetic processing unit 3c provided with a synchronization unit 31, a first determination unit 32, a processing control unit 33, a brush control unit 43, and a second determination unit 56. Furthermore, the steel sheet processing apparatus 100 is provided with the imaging unit 21 and the illumination unit 22 downstream from the laser irradiation unit 1 in the sheet passing direction and upstream from the brush roll 41 in the sheet passing direction, and is further provided with the imaging unit 54 and the illumination unit 55 downstream from the brush roll 41 in the sheet passing direction other than the imaging unit 21 and the illumination unit 22.

In this example, the synchronization unit 31 synchronizes the exposure start timing (imaging timing) of the imaging unit 21 with the irradiation timing of pulsed light by the illumination unit 22 using the distance L1 from the irradiation position of the steel sheet 200 with a laser beam by the laser irradiation unit 1 to the imaging position by the imaging unit 21, and makes the illumination unit 22 emit the pulsed light to a groove 201 in the steel sheet 200 and makes the imaging unit 21 image the groove 201 irradiated with the pulsed light at the timing when the groove 201 formed in the steel sheet 200 passes through the imaging position of the imaging unit 21.

In the steel sheet processing apparatus 100 according to the third embodiment, as in the above-described first embodiment, the first determination unit 32 determines the quality of the depth and the width of the groove 201 formed by the laser irradiation unit 1 on the basis of the captured image generated by the imaging unit 21. Then, the steel sheet processing apparatus 100 controls the laser irradiation unit 1 by the processing control unit 33 on the basis of the determination result obtained by the first determination unit 32, and thus can stably obtain a steel sheet 200 in a favorable processing state while conveying the steel sheet 200 at a predetermined sheet passing speed.

In this example, the synchronization unit 31 synchronizes the exposure start timing (imaging timing) of another imaging unit 54 with the irradiation timing of pulsed light by the illumination unit 55 paired with the imaging unit 54 using the distance L2 from the irradiation position of the steel sheet 200 with the laser beam by the laser irradiation unit 1 to the imaging position by the imaging unit 54, the illumination unit 55 emits the pulsed light to the groove 201 in the steel sheet 200 at the timing when the groove 201 formed in the steel sheet 200 passes through the imaging position of the imaging unit 54, and the imaging unit 54 images the groove 201 irradiated with the pulsed light.

In the steel sheet processing apparatus 100, as in the above-described second embodiment, the second determination unit 56 determines whether a protrusion portion is formed around the groove 201 of the steel sheet 200 and whether the height of the formed protrusion portion satisfies the standard value (whether the height is higher than the standard value) on the basis of the captured image generated by the imaging unit 54. Thus, the steel sheet processing apparatus 100 controls the brush roll 41 by the brush control unit 43 on the basis of the determination result of the second determination unit 56, and removes the protrusion portion of the steel sheet 200 by the brush roll 41 when the steel sheet 200 passes between the brush roll 41 and a support roll 42.

In addition, the steel sheet processing apparatus 100 according to the third embodiment has a configuration such that the determination result of the first determination unit 32 and the determination result of the second determination unit 56 are output to the brush control unit 43 and can be compared with each other. Thus, the steel sheet processing apparatus 100 can observe the surface state of the steel sheet 200 including the protrusion portion and the groove 201 before and after the removal treatment of the protrusion portion by the brush roll 41. Therefore, it is possible to determine not only whether the protrusion portion is sufficiently removed by the brush roll 41 but also whether a flaw is generated on the surface of the steel sheet 200 by the brush roll 41.

Such a configuration of the third embodiment enables the processing control unit 33 to control the laser irradiation unit 1 so that the groove 201 having a depth and a width satisfying predetermined standards is formed on the surface of the steel sheet 200 on the basis of the determination result obtained by the first determination unit 32 without measuring the leakage magnetic flux, and enables the brush control unit 43 to control the brush roll 41 so that a protrusion portion not satisfying a predetermined standard can be removed on the basis of the determination result obtained by the second determination unit 56. Thus, the steel sheet processing apparatus 100 according to the third embodiment can also stably obtain a steel sheet 200 in a favorable processing state while conveying the steel sheet 200 at a predetermined sheet passing speed, like the steel sheet processing apparatus 100 in the first embodiment and the second embodiment described above.

In addition, in the steel sheet processing apparatus according to the third embodiment, two determination results by the first determination unit 32 and the second determination unit 56 are compared to make it possible to determine whether the steel sheet 200 is in a favorable state on the basis of the state of the surface of the steel sheet 200 before and after the brush roll 41. Thus, the brush roll 41 is appropriately controlled on the basis of the determination result and, for example, can remove a protrusion portion not satisfying the standard, and therefore a steel sheet 200 in a favorable processing state can be stably obtained while the steel sheet 200 is conveyed at a predetermined sheet passing speed.

### (Fourth Embodiment)

In a fourth embodiment, a method different from the method of determining the quality of the groove 201 formed on the surface of the steel sheet 200 described in the first embodiment, that is, a method of determining the quality of a groove 201 formed on the surface of a steel sheet 200 using machine learning will be described.

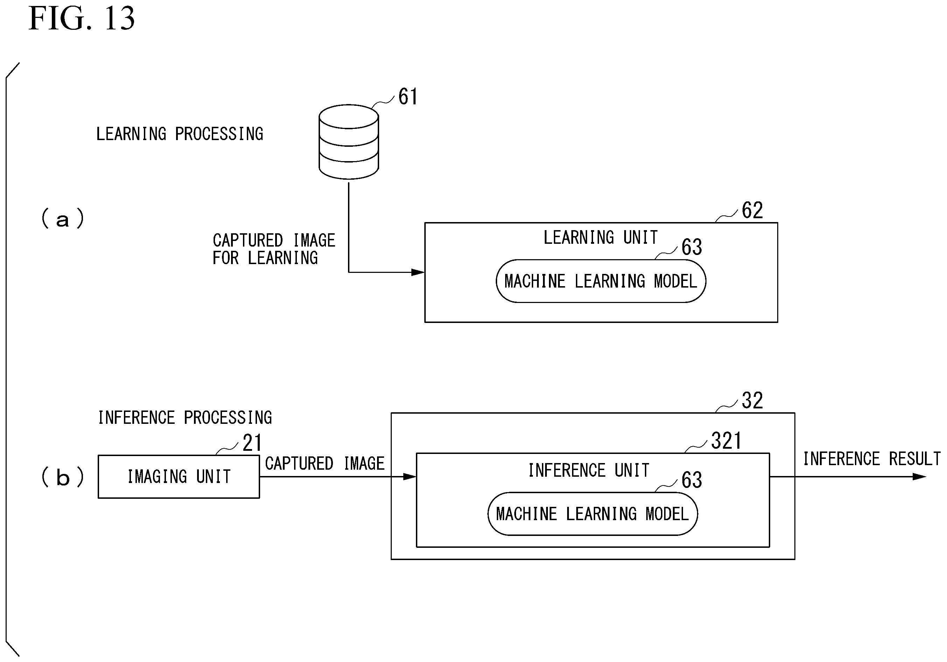

FIGS. 13(a) and 13(b) are diagrams illustrating a machine learning model included in the determination unit 32 of the present embodiment. FIG. 13(a) shows a schematic diagram for explanation of learning processing, and FIG. 13(b) shows a schematic diagram for explanation of inference processing. In the learning processing and the inference processing, an input is a captured image, and an output is a determination result obtained by determining the depth and the width of the groove 201 and the size of a protrusion portion and a determination result obtained by determining the focal position of a laser irradiation unit 1.

In the learning process illustrated in the upper diagram, a learning unit 62 performs machine learning using, as an input, a plurality of captured images for learning stored in advance in a database 61, and generates a machine learning model 63 that outputs a determination result obtained by determining the depth and the width of the groove 201 and the size of the protrusion portion and a determination result obtained by determining the focal position of the laser irradiation unit 1 on the basis of the captured images. Learning of an unlearned machine learning model include unsupervised learning and supervised learning.

The learning processing includes the supervised learning of an unlearned machine learning model in which, for example, the unlearned machine learning model learns a plurality of captured images for learning and corresponding actual measurement results for learning with correct answer labels and the like using the plurality of captured images for learning obtained by imaging the groove 201 and the protrusion portion of the steel sheet 200, the actual measurement results for learning obtained by actually measuring the depth and the width of the groove 201, the height of the protrusion portion, and the like in each captured image for learning, and the correct answer labels indicating whether each actual measurement result for learning is a desired result (for example, the accuracy rate indicating whether the groove 201 is in a desired state), and thus the learned machine learning model 63 is generated.

The learning processing includes the unsupervised learning of an unlearned machine learning model in which the unlearned machine learning model learns a rule and a feature from a plurality of captured images for learning and corresponding determination results for learning using the plurality of captured images for learning obtained by imaging the groove 201 and the protrusion portion of the steel sheet 200 and the determination results for learning obtained by determining the depth and the width of the groove 201, the height of the protrusion portion, and the like in each captured image for learning, and thus the learned machine learning model 63 is generated.

For example, in the learning processing, when an unlearned machine learning model learns by the supervised learning, a multilayer convolutional neural network (deep learning) can be used.

In the inference processing illustrated in FIG. 13(b), in a steel sheet processing apparatus 100 during groove processing of the surface of the steel sheet 200 under conveyance, the determination unit 32 performs inference processing using the learned machine learning model 63 with the captured image obtained from an imaging unit 21 as an input, and thus it is possible to obtain a determination result of the depth and the width of the groove 201 and the size of the protrusion portion and a determination result of the focal position of the laser irradiation unit 1 on the basis of the captured image.

In this case, the determination unit 32 includes an inference unit 321 that performs inference processing using the learned machine learning model 63 generated by the learning processing. The inference unit 321 outputs a determination result obtained by determining the depth and the width of the groove 201 and the size of the protrusion portion and a determination result obtained by determining the focal position of the laser irradiation unit 1 on the basis of the captured image obtained from the imaging unit 21.

Hereinafter, details of the learning processing and the inference processing for generation of the learned machine learning model 63 will be described using an example of obtaining the focal length of a laser beam scanned and emitted to the steel sheet 200. Here, an example will be described in which an unlearned machine learning model learns by the supervised learning using deep learning.

Prior to the learning process illustrated in the upper diagram, grooves 201 are imaged that are formed while the focal length of the laser beam scanned and emitted from the laser irradiation unit 1 is controlled to change the focal point of the laser beam to the surface of the steel sheet 200, and thus a plurality of captured images for learning are prepared. For example, using the steel sheet processing apparatus 100 illustrated in FIG. 2, the focal position of the laser beam emitted from the laser irradiation unit 1 is set to be above the steel sheet 200, and a groove 201 is formed on the surface of the steel sheet 200 in a state where the laser beam is not focused on the surface of the steel sheet 200. Then, the groove 201 of the steel sheet 200 under conveyance is irradiated with pulsed light from the illumination unit 22, and the groove 201 is imaged by the imaging unit 21 at a timing when the groove 201 is irradiated with the pulsed light to acquire a captured image for learning.

Furthermore, in order to obtain another captured image for learning, the focal position of the laser beam emitted from the laser irradiation unit 1 is set on the surface of the steel sheet 200, and in this optimum state, a groove 201 is formed on the surface of the steel sheet 200. Then, the groove 201 of the steel sheet 200 under conveyance is irradiated with the pulsed light from the illumination unit 22, and the groove 201 is imaged by the imaging unit 21 at a timing when the groove 201 is irradiated with the pulsed light to acquire another captured image for learning.

Furthermore, in order to obtain another captured image for learning, the focal position of the laser beam emitted from the laser irradiation unit 1 is set inside the steel sheet 200, and a groove 201 is formed on the surface of the steel sheet 200 in a state where the laser beam is not focused on the surface of the steel sheet 200. Then, the groove 201 of the steel sheet 200 under conveyance is irradiated with pulsed light from the illumination unit 22, and the groove 201 is imaged by the imaging unit 21 at a timing when the groove 201 is irradiated with the pulsed light to acquire a captured image for learning. Thus, a plurality of captured images for learning of a plurality of kinds are obtained by imaging the grooves 201 formed on the surface of the steel sheet 200 while the focal position of the laser beam scanned and emitted from the laser irradiation unit 1 is changed.

Each of these captured images for learning is provided with an actual measurement result for learning indicating the distance from the steel sheet 200 to the focal position, or a correct answer label indicating that the focal position of the laser beam is favorable in a case where the focal position is within a predetermined distance above and below the steel sheet 200 and that the focal position is unfavorable in other cases. At this time, each of these captured images for learning may be provided with actual measurement results obtained by actually measuring the depth and the width of the groove 201 formed on the surface of the steel sheet 200, the height of the protrusion portion, and the like with an electron microscope or the like.

The learning unit 62 provides the correct answer labels when an unlearned machine learning model learns by machine learning in which deep learning is used by using a plurality of captured images for learning and corresponding actual measurement results for learning stored in the database 61, and generates the machine learning model 63.

In actual groove processing of the steel sheet 200 by the steel sheet processing apparatus 100, the inference unit 321 can estimate the defocus of the laser irradiation unit 1, the depth and the width of the groove 201 formed in the steel sheet 200, and the presence or absence of the protrusion portion by using the learned machine learning model 63 generated by the learning unit 62 as described above, and determine the quality thereof. Specifically, in the steel sheet processing apparatus 100 during actual groove processing of the surface of the steel sheet 200 under conveyance, the groove 201 of the steel sheet 200 under conveyance is irradiated with the pulsed light from the illumination unit 22, and the groove 201 is imaged by the imaging unit 21 at a timing when the groove 201 is irradiated with the pulsed light to acquire a captured image. The inference unit 321 receives the obtained captured image and inputs the captured image to the learned machine learning model 63, and thus outputs determination results obtained by estimating the defocus of the laser irradiation unit 1, the depth and the width of the groove 201 formed in the steel sheet 200, and the presence or absence of the protrusion portion, and determination results obtained by determining the quality thereof.

The steel sheet processing apparatus 100 can change the setting of the processing conditions of the laser irradiation unit 1 or change the position and the rotation speed of the brush roll 41 on the basis of the determination result obtained from the inference unit 321, and therefore a steel sheet 200 in a favorable processing state can be stably obtained while the steel sheet 200 is conveyed at a predetermined sheet passing speed.

### (Fifth Embodiment)

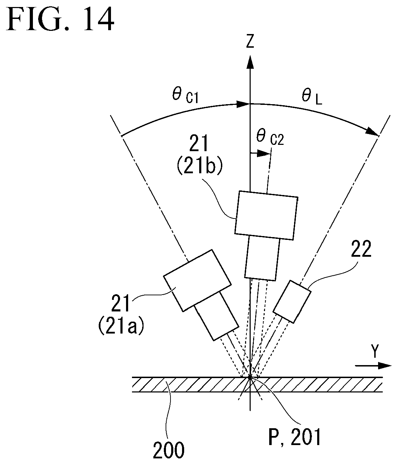

A fifth embodiment of the present invention will be described below with reference to FIGS. 14 to 23.

FIG. 14 is a view illustrating a schematic configuration of a steel sheet processing apparatus in the fifth embodiment, and is a longitudinal sectional view along the sheet thickness direction of a steel sheet 200. As illustrated in FIG. 14, a steel sheet processing apparatus 100 of the present embodiment has a configuration particularly different from that in the first embodiment described above with reference to FIG. 2 in that the number of cameras of imaging unit 21 is increased by one to two and that the incident optical axes of the cameras are different from each other.

That is, the imaging unit 21 of the present embodiment includes a camera 21a installed at the specular reflection position and a camera 21b installed at the diffuse reflection position with the Z direction, which is the normal direction of the sheet surface, as the symmetry axis. The camera 21a captures a captured image for determination of the depth and the width of a groove 201. In the camera 21b, the intensity of the reflected light from the side wall of the groove 201 is increased, and therefore the luminance of the reflected light from the side wall is higher than in the case of imaging at the position of the camera 21a.

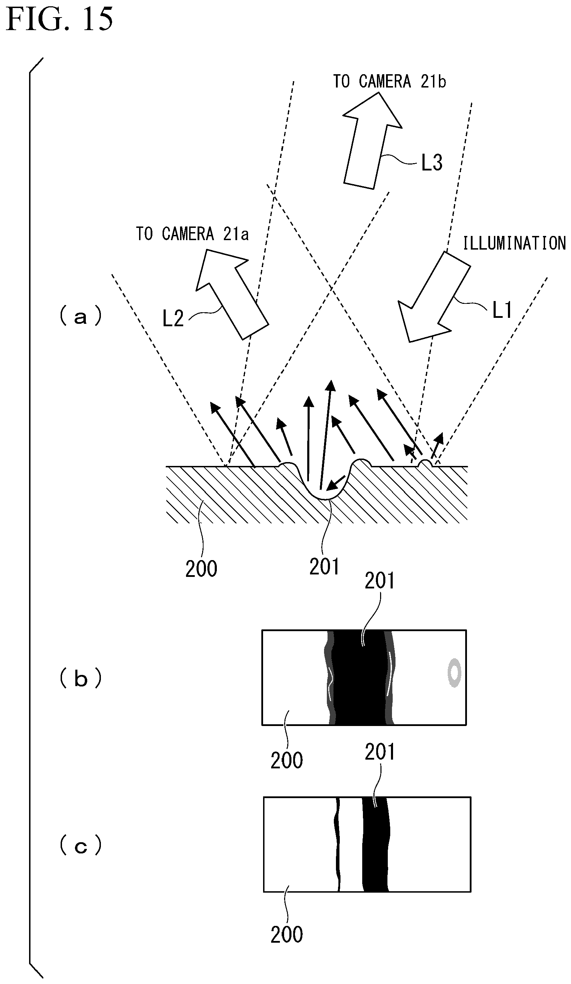

FIG. 15 exemplifies a case where a favorable groove 201 is formed. FIG. 15 illustrates the groove 201 having a groove depth of 25 µm (dg = 25 µm), and (a) shows a longitudinal sectional view along the sheet passing direction of the steel sheet 200, (b) shows a captured image captured by the camera 21a, and (c) shows a captured image captured by the camera 21b. In FIG. 15(a), the irradiation optical axis of spot light from an illumination unit 22 is indicated by Reference Number L1, the incident optical axis (first incident optical axis) reflected by the steel sheet 200 and directed to the camera 21a is indicated by Reference Number L2, and the incident optical axis (first incident optical axis) reflected by the steel sheet 200 and directed to the camera 21b is indicated by Reference Number L2.

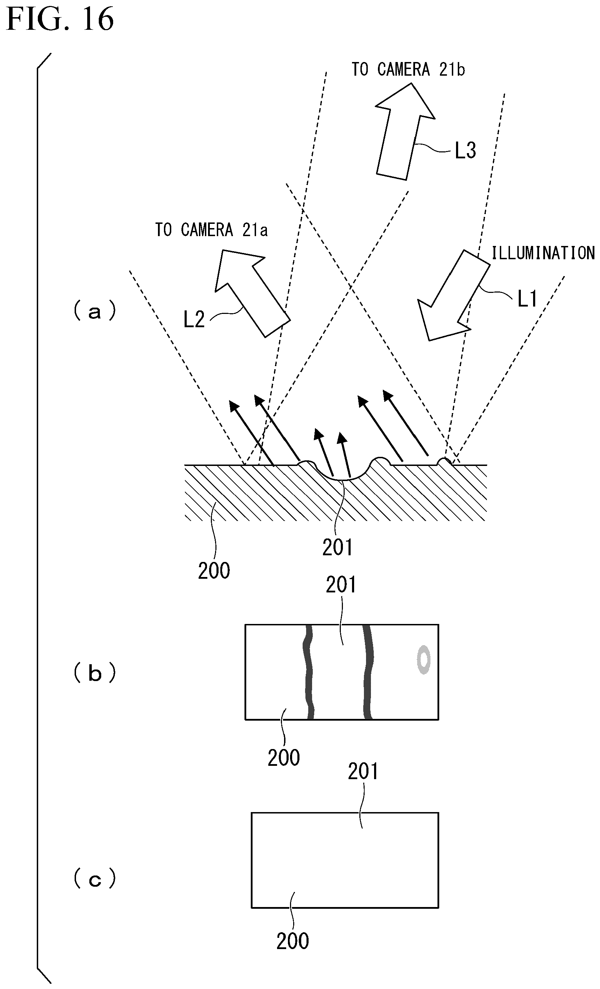

FIG. 16 exemplifies a case where an unfavorable shallow groove 201 is formed. FIG. 15 illustrates the groove 201 having a groove depth of 15 µm (dg = 15 µm), and (a) shows a longitudinal sectional view along the sheet passing direction of the steel sheet 200, (b) shows a captured image captured by the camera 21a, and (c) shows a captured image captured by the camera 21b. In FIG. 16(a), the irradiation optical axis of the spot light from the illumination unit 22 is indicated by Reference Number L1, the incident optical axis (first incident optical axis) reflected by the steel sheet 200 and directed to the camera 21a is indicated by Reference Number L2, and the incident optical axis (first incident optical axis) reflected by the steel sheet 200 and directed to the camera 21b is indicated by Reference Number L2.

In comparison between FIG. 15(b) and FIG. 16(b), although the arrangement of the illumination unit 22 and the cameras 21a and 21b is the same, a difference in the depth of the groove 201 appears in the captured images as a difference in the luminance distribution. That is, in comparison between FIG. 15(b) and FIG. 16(b), the groove 201 is displayed darker (in a darker color) in FIG. 15(b) in which the groove 201 has a deep depth than in FIG. 16(b) in which the groove 201 has a shallow depth.

In comparison between FIG. 15(b) and FIG. 15(c), although a state is imaged in which the same groove 201 is irradiated with the same irradiation optical axis L1, the luminance of the entire groove 201 including the side wall surface is different between FIG. 15(b) and FIG. 15(c) due to a difference in the arrangement of the cameras 21a and 21b (difference between the incident optical axes L2 and L3).

Similarly, in comparison between FIG. 16(b) and FIG. 16(c), although a state is imaged in which the same groove 201 is irradiated with the same irradiation optical axis L1, the luminance of the entire groove 201 including the side wall surface is different between FIG. 16(b) and FIG. 16(c) due to a difference in the arrangement of the cameras 21a and 21b (difference between the incident optical axes L2 and L3).

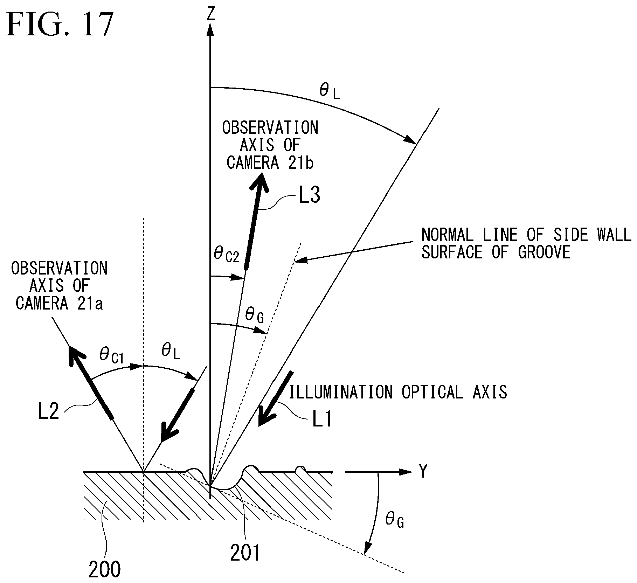

As can be seen from the above results, in the present embodiment, the two cameras 21a and 21b having the incident optical axes L2 and L3 different from each other are used in combination to acquire two captured images, and thus it is possible to acquire not only the depth and the width of the groove 201 but also the inclination angle of the side wall surface of the groove 201. This point will be described with reference to FIG. 17 and subsequent drawings. FIG. 17 is a longitudinal sectional view along the sheet passing direction and the sheet thickness direction of the steel sheet 200.

In the sectional view illustrated in FIG. 17, θ_{G} (°) represents the angle formed by the tangential line at the position of the side wall surface of the groove 201 and the sheet passing direction. θ_{C2} (°) represents the angle formed by the sheet thickness direction (Z direction) of the steel sheet 200 at the position of the side wall surface of the groove 201 and the incident optical axis L3 of the camera 21b. θ_{L} (°) represents the angle formed by the illumination optical axis L1 with respect to the sheet thickness direction (Z direction) of the steel sheet 200. θ_{C1} (°) represents the angle formed by the incident optical axis L2 of the camera 21a with respect to the sheet thickness direction (Z direction) of the steel sheet 200.

In a case where the groove 201 is formed on the surface of the steel sheet 200 to perform magnetic domain control, the iron loss and the magnetic flux density are affected by the inclination angle θ_{G} (°) of the side wall surface in the cross-sectional shape of the groove 201, in addition to the groove depth and the width.

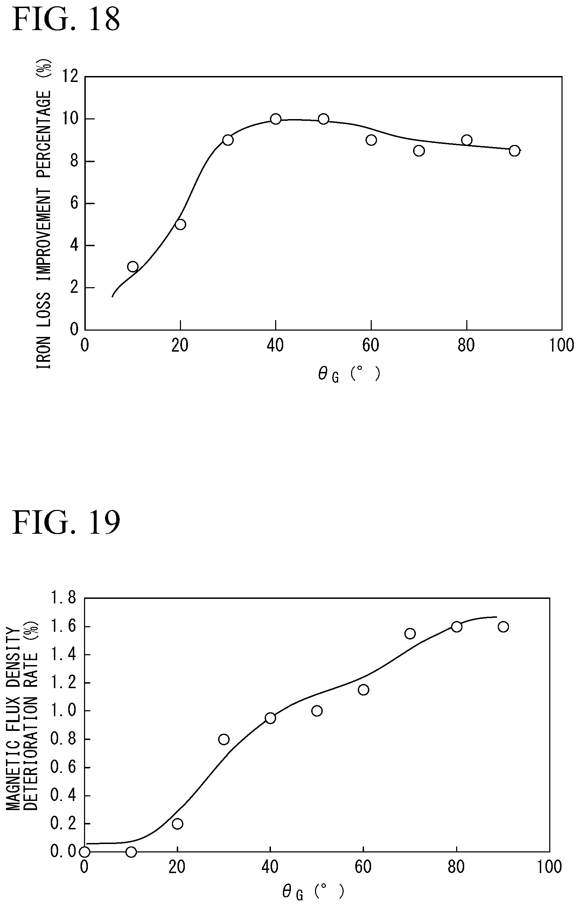

The proportion of the reduction amount of the iron loss of the steel sheet 200 after formation of the groove 201 to the iron loss of the steel sheet 200 before formation of the groove 201 is referred to as the iron loss improvement percentage (%). FIG. 18 shows the relation between the inclination angle θ_{G} (°) of the side wall surface and the iron loss improvement percentage (%) in this case. As shown in FIG. 18, at a small inclination angle θ_{G}, the iron loss improvement percentage is small. Meanwhile, in the range of the inclination angle θ_{G} of a certain angle or more, the iron loss improvement percentage greatly increases.

Meanwhile, as shown in FIG. 19, as the inclination angle θ_{G} approaches 90°, the magnetic flux density generated at the time of magnetization of the steel sheet 200 decreases. In the case of consideration of a transformer using the steel sheet 200, the desirable performance is a low iron loss and a high magnetic flux density.

Therefore, from FIGS. 18 and 19, an inclination angle θ_{G} of 30° to 60° is preferably adopted. Then, the laser irradiation unit 1 is preferably controlled through determination based on the captured image so as to obtain the inclination angle θ_{G} = 30° to 60°. The inclination angle θ_{G} is particularly preferably in the vicinity of 40°.

In the present embodiment, as described above, the inclination angle θ_{G} of the groove 201 can be determined from the difference in luminance between a plurality of observation cameras (cameras 21a and 21b) having different observation angles. Therefore, if the observation angles are appropriately set, it is possible to determine whether the inclination angle θ_{G} is within a preferable range for the magnetic characteristics. As a specific example, a determination whether the inclination angle θ_{G} is in the vicinity of 40°, which is an angle considered to be particularly preferable, will be described.

As illustrated in FIG. 14, the inclination angles of the observation axes of the two cameras 21a and 21b from the Z axis are represented by θ_{C1} and θ_{C2}, the inclination angle of the illumination optical axis from the Z axis is represented by θ_{L}, and a preferable inclination angle of the side wall of the groove 201 from the viewpoint of the magnetic characteristics is represented by θ_{G0}, and the relation between these angles can be expressed by the following Formulas 1 to 2. Note that these angles are expressed so that the normal line (Z axis) of the sheet surface is set to 0°, the clockwise direction is the positive angle direction, and the counterclockwise direction is the negative angle direction. ${θ}_{C 1} = - {θ}_{L}$ (Formula 1) ${θ}_{C 2} = A - {θ}_{L}$ (Formula 2) $60 ° \leq A \leq 120 °$ (Formula 3)

Here, A = 2 × θ_{G0}. The magnetic characteristics are favorable in the range of θ_{G0} of 30° to 60°, and therefore the range of A is preferably set with Formula 3. In the case of θ_{G0} = 40° as an example in which the magnetic characteristics are particularly preferable in the range, the angles A = 80°, θ_{L} = 50°, θ_{C1} = -30°, and θ_{C2} = 30° were set, and the luminance of a plurality of groove parts having different groove inclination angles θ_{G} was observed.

The determination may be made using the luminance ratio Re of the captured image. The luminance ratio Re is as defined below.

In the case of the camera 21a, with Em1 representing the average value of the observation luminance of the steel sheet flat part other than the groove 201 and E1 representing the observation luminance of the groove side wall portion, the luminance ratio Re1 = E1/Em1 was calculated. Note that Em1 is the specular luminance for the camera 21a, and is the maximum luminance observed by the camera 21a. In the case of the camera 21b, a groove 201 having an inclination angle of 40° was prepared, and the average value of the observation luminance of the sidewall inclined portion of the groove 201 at this time was represented by Em2. In addition, the observation luminance of the sidewall inclined portion of a groove 201 having a different inclination angle was represented by E2, and the luminance ratio Re2 = E2/Em2 was calculated. Note that in this setting, Em2 is the specular luminance for the camera 21b, and is the maximum luminance observed by the camera 21b. The luminance ratios Re1 and Re2 correspond to a relative calibration value with respect to the absolute maximum value of the observation luminance observed by each of the cameras 21a and 21b set to 100%.

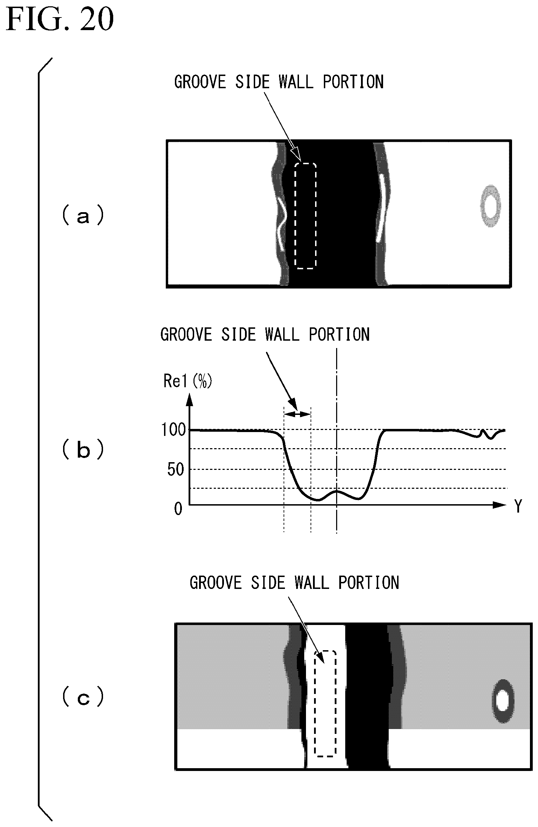

FIG. 20(a) is a display example of the imaging luminance of the camera 21a. FIG. 20(b) is the distribution of the luminance ratio Re1 in the Y direction, that is, in the direction orthogonal to the extending direction of the groove 201 based on FIG. 20(a). Here, the part where the luminance ratio Re1 rapidly decreases and the part where the luminance ratio Re1 rapidly increases in the positive direction of Y are each determined as a side wall portion of the groove 201 in the arrangement illustrated in FIG. 14. The amount of change in the luminance ratio Re1 may be determined, for example, in the range where the luminance ratio Re1 changes from 90% to 10%. Alternatively, the determination may be made on the basis of a differential value of the luminance ratio Re1.

FIG. 20(c) is a display example of the luminance ratio Re2 based on the imaging result of the camera 21b. The cameras 21a and 21b adjust their imaging positions to make the positions of the grooves 201 in the imaging screens coincide with each other. Therefore, as shown in FIG. 20(c), the position of the side wall portion of the groove 201 determined by the camera 21a is determined in the imaging screen of the camera 21b.

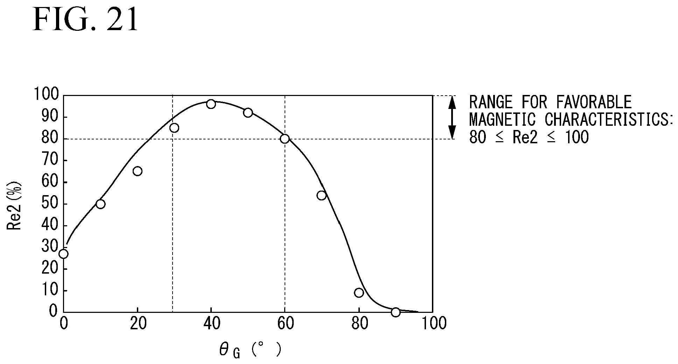

FIG. 21 is a graph showing the relation between the inclination angle θ_{G} of the side wall of the groove 201 and the luminance ratio Re2 of the side wall portion. Here, A = 80°, θ_{L} = 50°, θ_{C1} = -50°, θ_{C2} = 30°, θ_{C1} = -θ_{L}, and θ_{C2} = A - θ_{L}.

In the setting of the present embodiment, the value of the luminance ratio Re2 is 80% or more in a preferable range of the inclination angle θ_{G} of the side wall of 30° to 60°. Therefore, the magnetic characteristics can be determined by determining whether the luminance ratio Re2 is within this range.

Note that the standard value for determination is not limited to the above range, and when the value of A or θ_{L} is appropriately changed, the standard value may be appropriately adjusted and changed according to the change.

### (Sixth Embodiment)

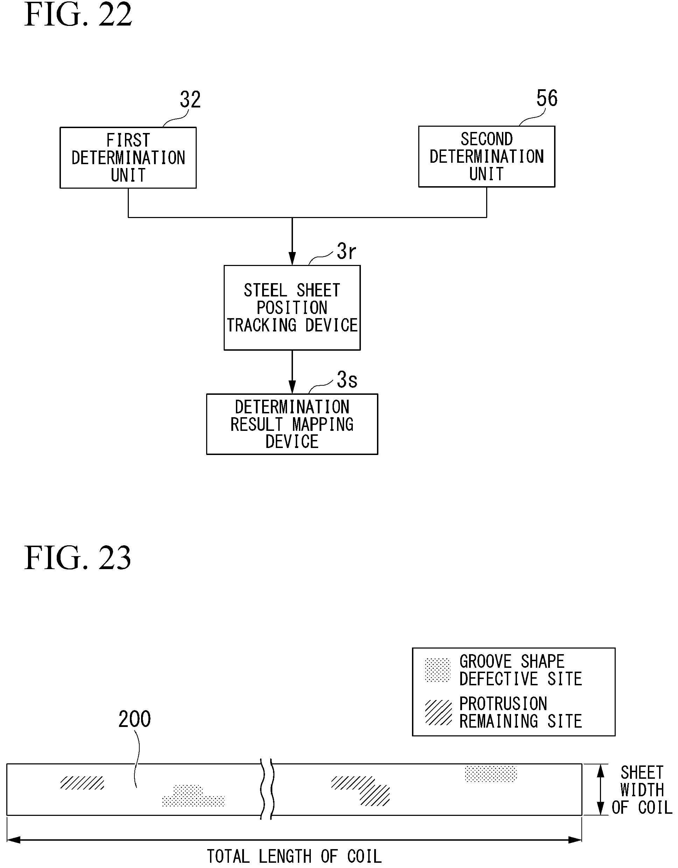

A sixth embodiment of the present invention will be described below with reference to FIGS. 22 to 23. FIG. 22 is a block diagram showing a schematic configuration of a determination result mapping device. FIG. 23 is a map in which a groove shape defective site and a protrusion remaining site are mapped over the total length of a steel sheet by the determination result mapping device.

As shown in FIG. 22, in the present embodiment, the arithmetic processing unit 3 includes a first determination unit 32, a second determination unit 56, a steel sheet position tracking device 3r, and a determination result mapping device 3s.

The steel sheet position tracking device 3r acquires the formation positions of all the grooves 201 in a steel sheet 200 as sheet position information.

The first determination unit 32 determines the presence or absence of a shape defect in the groove 201.

The second determination unit 56 determines the presence or absence of a protrusion to be removed.

Then, for all the grooves 201 in the steel sheet 200, the sheet position information is associated with the presence or absence of a shape defect and the presence or absence of a protrusion to be removed. Then, the information associated in this manner is mapped and displayed by the determination result mapping device 3s as shown in FIG. 23. Thus, it is possible to grasp a groove shape defective site and a protrusion remaining site in the total length of a coil. According to this map, coils can be divided into ranks or applications.

In the present invention, various embodiments and modifications are possible without departing from the scope of the present invention. The above-described embodiments are for describing the present invention, and do not limit the scope of the present invention. That is, the scope of the present invention is indicated not by the embodiments but by Claims. Various modifications made within the scope of Claims and the meaning of the invention equivalent thereto are regarded as being within the scope of the present invention. Furthermore, in the above-described embodiment, the forms of the captured image and the captured image for learning naturally include not only a form as a specific image displayed on a display unit such as a monitor but also a form of data before being generated as an image on the display unit. Furthermore, a steel sheet processing apparatus may be used in which the configuration of the first embodiment to the configuration of the sixth embodiment described above are appropriately combined.

In addition, in the above-described embodiments, a case is described in which the brush roll 41 is applied as the removal unit configured to remove the protrusion portion formed on the steel sheet 200, but the present invention is not limited to such a case, and as the processing in the removal unit, for example, various other removal processing methods of removing the protrusion portion formed on the steel sheet 200 can be applied such as processing with a non-roll-shaped brush and chemical processing such as pickling. In these cases, the brush control unit 43 performs control according to the kind of the removal unit to operate the removal unit, and removes the protrusion portion formed on the steel sheet 200 by the removal unit.

### INDUSTRIAL APPLICABILITY

According to the present invention described above, even in a case where the steel sheet is passed at a high sheet passing speed, a captured image can be generated in which a groove formed on the surface of the steel sheet is clearly imaged. Thus, the state of the groove can be determined on the basis of the captured image, and feedback control over groove processing can be performed on the basis of the determination, so that a steel sheet can be stably manufactured that can achieve desired magnetic characteristics. Therefore, industrial applicability is large.

### REFERENCE SIGNS LIST

1 Laser irradiation unit
3, 3b, 3c Arithmetic processing unit
21, 54 Imaging unit
22, 55 Illumination unit
31 Synchronization unit
32, 56 Determination unit
33 Processing control unit
41 Brush roll (removal unit)
43 Brush control unit
63 Machine learning model
100 Steel sheet processing apparatus
200 Steel sheet
201 Groove

## Claims

1. A steel sheet processing apparatus (100) for processing a groove (201) on a surface of a steel sheet (200) passed in a sheet passing direction in a dark manufacturing line, the steel sheet processing apparatus (100) comprising:
a laser irradiation unit (1) configured to irradiate the surface with a laser beam to form the groove (201) parallel or substantially parallel to a sheet width direction of the steel sheet (200);
the steel sheet processing apparatus being **characterized by**:
an arithmetic processing unit (3) including a synchronization unit (31), a determination unit (32), and a processing control unit (33); wherein the synchronization unit (31) is connected to the laser irradiation unit (1), an imaging unit (21), and an illumination unit (22), and is configured to receive a signal indicating the end of one cycle of scanning from the laser irradiation unit (1); the illumination unit (22, 55) configured to irradiate the groove (201) formed by the laser irradiation unit (1) with pulsed light;
the imaging unit (21, 54) configured to image the groove (201) irradiated with the pulsed light with an exposure time longer than an irradiation time of the pulsed light to generate a captured image wherein the synchronization unit (31) is further configured to synchronize the imaging timing of the imaging unit (21) with the irradiation timing of the illumination unit (22) so that the exposure time Ti in the imaging unit (21) and the irradiation time Tp of the pulsed light in the illumination unit (22) temporally overlap with each other;
the determination unit (32, 56) configured to make a determination based on the captured image; and
the processing control unit (33) configured to control an operation of the laser irradiation unit (1), wherein
the determination unit (32, 56) determines whether the groove (201) satisfies a first standard of at least one of a depth or a width of the groove (201) on a basis of the captured image, and
in a case where the determination unit (32, 56) determines that the groove (201) does not satisfy the first standard, the processing control unit (33) controls the laser irradiation unit (1) so that the groove (201) formed by the laser irradiation unit (1) satisfies the first standard.

2. The steel sheet processing apparatus (100) according to claim 1, wherein
in a sectional view along the sheet passing direction in a sheet thickness direction of the steel sheet (200),
the illumination unit (22, 55) has an illumination optical axis in one side with respect to a normal line of the surface, and
the imaging unit (21, 54) includes a first camera having a first incident optical axis, in another side with respect to the normal line, at a position of specular reflection of the illumination optical axis and includes a second camera having a second incident optical axis at a position different from the position of specular reflection.

3. The steel sheet processing apparatus (100) according to claim 2, wherein
in the sectional view, θ_{L} (°) representing an angle formed by the normal line and the illumination optical axis, θ_{C1} (°) representing an angle formed by the normal line and the first incident optical axis, and θ_{C2} (°) representing an angle formed by the normal line and the second incident optical axis satisfy Formulas 1 to 3 described below: ${θ}_{C 1} = - {θ}_{L}$ (Formula 1) ${θ}_{C 2} = A - {θ}_{L}$ (Formula 2) $60 ° \leq A \leq 120 °$ (Formula 3)

4. The steel sheet processing apparatus (100) according to claim 3, wherein
the determination unit (32, 56) further determines whether the groove (201) in the sectional view has a side wall having an inclination angle satisfying a second standard on a basis of the captured image captured by the first camera and the captured image captured by the second camera, and
in a case where the determination unit (32, 56) determines that the second standard is not satisfied, the processing control unit (33) controls the laser irradiation unit (1) so that the second standard in addition to the first standard is satisfied.

5. The steel sheet processing apparatus (100) according to claim 1, further comprising a removal unit configured to remove a protrusion generated in the groove (201), wherein
the processing control unit (33) controls the removal unit in addition to the laser irradiation unit (1),
the illumination unit (22, 55) and the imaging unit (21, 54) are disposed downstream from a position of the removal unit in the sheet passing direction,
the determination unit (32, 56) includes:
a first determination unit (32) configured to determine whether the groove (201) satisfies the first standard on the basis of the captured image; and
a second determination unit (56) configured to determine whether the protrusion generated in the groove (201) satisfies a third standard of at least one of a height or a width of the protrusion on a basis of the captured image, and
in a case where the second determination unit (56) determines that the protrusion does not satisfy the third standard, the processing control unit (33) controls the removal unit to remove the protrusion.

6. The steel sheet processing apparatus (100) according to claim 5, further comprising another one of the illumination unit (22, 55) and another one of the imaging unit (21, 54) disposed between the laser irradiation unit (1) and the removal unit in the sheet passing direction.

7. The steel sheet processing apparatus (100) according to claim 5, further comprising:
a tracking unit configured to acquire a position of the groove (201) and a position of the protrusion on the surface of the steel sheet; and
a mapping unit configured to create a map including groove information associating the position of the groove (201) with a shape of the groove and protrusion information associating the position of the protrusion with a shape of the protrusion.

8. The steel sheet processing apparatus (100) according to claim 1, further comprising:
a removal unit configured to remove a protrusion generated in the groove (201); and
a processing control unit (33) configured to control an operation of the removal unit, wherein
the determination unit determines whether the protrusion generated in the groove (201) satisfies a third standard of at least one of a height or a width of the protrusion on a basis of the captured image, and
in a case where the determination unit determines that the protrusion does not satisfy the third standard on the basis of the captured image, the processing control unit (33) controls the removal unit to remove the protrusion.

9. The steel sheet processing apparatus (100) according to any one of claims 1 to 8, wherein the determination unit makes a determination using a machine learning model generated by machine learning.

10. A method for controlling a steel sheet processing apparatus (100) for processing a groove (201) on a surface of a steel sheet (200) passed in a sheet passing direction in a dark manufacturing line, the method comprising:
a laser irradiation step of irradiating the surface with a laser beam from a laser irradiation unit (1) to form the groove (201) parallel or substantially parallel to a sheet width direction of the steel sheet (200);
the method being **characterized by** the following steps:
an illumination step of irradiating the groove (201) with pulsed light from an illumination unit (22, 55);
an imaging step using an imaging unit (21), the step being of imaging the groove (201) irradiated with the pulsed light by an imaging unit (21, 54) with an exposure time longer than an irradiation time of the pulsed light to generate a captured image on the basis of a signal that is received from a synchronization unit (31), which indicates the timing when the groove (201) formed on the passing steel sheet (200) reaches the imaging position of the imaging unit (21);
a determination step of making a determination based on the captured image by a determination unit; and
a processing control step of controlling an operation of the laser irradiation unit (1) by a processing control unit (33), wherein
in the determination step, a determination based on the captured image is made whether the groove (201) satisfies a first standard of at least one of a depth or a width of the groove (201), and
in a case where a determination is made that the groove (201) does not satisfy the first standard in the determination step, the laser irradiation unit (1) is controlled in the processing control step so that the groove (201) formed by the laser irradiation unit (1) satisfies the first standard.

11. The method according to claim 10, wherein
in a sectional view along the sheet passing direction in a sheet thickness direction of the steel sheet (200),
in the illumination step, the pulsed light is emitted along an illumination optical axis in one side with respect to a normal line of the surface of the steel sheet (200), and
in the imaging step, imaging is performed along a first incident optical axis, in another side with respect to the normal line, at a position of specular reflection of the illumination optical axis, and imaging is performed along a second incident optical axis at a position different from the position of specular reflection.

12. The method according to claim 11, wherein
in the sectional view, in the illumination step and the imaging step, the illumination optical axis, the first incident optical axis, and the second incident optical axis are set to satisfy Formulas 1 to 3 described below: ${θ}_{C 1} = - {θ}_{L}$ (Formula 1) ${θ}_{C 2} = A - {θ}_{L}$ (Formula 2) $60 ° \leq A \leq 120 °$ (Formula 3)
wherein θ_{L} (°) represents an angle formed by the normal line and the illumination optical axis, θ_{C1} (°) represents an angle formed by the normal line and the first incident optical axis, and θ_{C2} (°) represents an angle formed by the normal line and the second incident optical axis.

13. The method according to claim 12, wherein
in the determination step, a determination is further made whether the groove (201) has a side wall having an inclination angle satisfying a second standard on a basis of the captured image obtained by imaging along the first incident optical axis and the captured image obtained by imaging along the second incident optical axis, and
in a case where a determination is made that the second standard is not satisfied in the determination step, the laser irradiation unit (1) is controlled in the processing control step so that the second standard in addition to the first standard is satisfied.

14. The method according to claim 10, further comprising:
a temporal imaging step of acquiring a plurality of the captured images of the groove (201) passing through positions identical in the sheet width direction of the steel sheet (200) over time;
a temporal-change acquisition step of acquiring a temporal change in a shape of the groove (201) passing through the positions on a basis of each of the plurality of the captured images obtained in the temporal imaging step; and
an adjustment-necessity determination step of determining necessity of adjustment of the laser irradiation unit (1) on a basis of whether the temporal change obtained in the temporal-change acquisition step satisfies a fourth standard.

15. The method according to claim 10, wherein
the processing control step includes a step of removing a protrusion generated in the groove (201) by using a removal unit located downstream from the laser irradiation unit (1) in the sheet passing direction,
in the determination step, in addition to a determination on the groove (201), a determination based on the captured image is made whether a third standard as a standard of at least one of a height or a width of the protrusion is satisfied, and
in a case where a determination is made that the protrusion does not satisfy the third standard in the determination step, the protrusion is removed in the processing control step.

16. The method according to claim 15, wherein
the illumination step, the imaging step, and the determination step are individually performed at each of
a position between the laser irradiation unit (1) and the removal unit in the sheet passing direction and
a position downstream from the removal unit in the sheet passing direction.

17. The method according to claim 15, further comprising:
a tracking step of acquiring a position of the groove (201) and a position of the protrusion on the surface of the steel sheet (200); and
a mapping step of creating a map including groove information associating the position of the groove (201) with a shape of the groove and protrusion information associating the position of the protrusion with a shape of the protrusion.

18. The method according to claim 10, further comprising:
a removal step of removing a protrusion generated in the groove (201) by a removal unit, wherein
in the determination step, a determination base on the captured image is made whether a third standard as a standard of at least one of a height or a width of the protrusion is satisfied, and
in a case where a determination is made that the protrusion does not satisfy the third standard in the determination step, the removal unit is controlled to remove the protrusion in the removal step.

19. The method according to any one of claims 10 to 18, wherein a determination in the determination step is made using a machine learning model generated by machine learning.

## Patentansprüche

1. Stahlblechbearbeitungsvorrichtung (100) zum Bearbeiten einer Nut (201) auf einer Oberfläche eines Stahlblechs (200), das eine dunkle Fertigungslinie in einer Blechlaufrichtung durchläuft, wobei die Stahlblechbearbeitungsvorrichtung (100) aufweist:
eine Laserbestrahlungseinheit (1), die dafür konfiguriert ist, die Oberfläche mit einem Laserstrahl zu bestrahlen, um die Nut (201) parallel oder im Wesentlichen parallel zur Blechbreitenrichtung des Stahlblechs (200) auszubilden,
wobei die Stahlblechbearbeitungsvorrichtung **gekennzeichnet ist durch**:
eine Rechenverarbeitungseinheit (3), die eine Synchronisationseinheit (31), eine Entscheidungseinheit (32) und eine Verarbeitungssteuereinheit (33) aufweist, wobei die Synchronisationseinheit (31) mit der Laserbestrahlungseinheit (1), einer Abbildungseinheit (21) und einer Beleuchtungseinheit (22) verbunden ist und dafür konfiguriert ist, von der Laserbestrahlungseinheit (1) ein Signal zu empfangen, das das Ende eines Abtastzyklus anzeigt, wobei
die Beleuchtungseinheit (22, 55) dafür konfiguriert ist, die **durch** die Laserbestrahlungseinheit (1) ausgebildete Nut (201) mit gepulstem Licht zu bestrahlen,
die Abbildungseinheit (21, 54) dafür konfiguriert ist, die mit dem gepulsten Licht bestrahlte Nut (201) mit einer Belichtungszeit abzubilden, die länger ist als eine Bestrahlungszeit des gepulsten Lichts, um ein aufgenommenes Bild zu erzeugen, wobei die Synchronisationseinheit (31) ferner dafür konfiguriert ist, die Abbildungszeit der Abbildungseinheit (21) mit der Bestrahlungszeit der Beleuchtungseinheit (22) derart zu synchronisieren, dass sich die Belichtungszeit Ti in der Abbildungseinheit (21) und die Bestrahlungszeit Tp des gepulsten Lichts in der Beleuchtungseinheit (22) zeitlich überlappen,
die Entscheidungseinheit (32, 56) dafür konfiguriert ist, eine Entscheidung basierend auf dem aufgenommenen Bild zu treffen, und
die Verarbeitungssteuereinheit (33) dafür konfiguriert ist, einen Betrieb der Laserbestrahlungseinheit (1) zu steuern, wobei
die Entscheidungseinheit (32, 56) basierend auf dem aufgenommenen Bild entscheidet, ob die Nut (201) einen ersten Standard mindestens einer Tiefe und/oder einer Breite der Nut (201) erfüllt,
wenn die Entscheidungseinheit (32, 56) bestimmt, dass die Nut (201) den ersten Standard nicht erfüllt, die Verarbeitungssteuereinheit (33) die Laserbestrahlungseinheit (1) derart steuert, dass die **durch** die Laserbestrahlungseinheit (1) ausgebildete Nut (201) den ersten Standard erfüllt.

2. Stahlblechbearbeitungsvorrichtung (100) nach Anspruch 1, wobei
in einer Schnittansicht entlang der Blechlaufrichtung in einer Blechdickenrichtung des Stahlblechs (200)
die Beleuchtungseinheit (22, 55) eine optische Beleuchtungsachse auf einer Seite bezüglich einer Normalen zur Oberfläche aufweist, und
die Abbildungseinheit (21, 54) eine erste Kamera mit einer ersten optischen Achse von einfallendem Licht auf einer anderen Seite in Bezug auf die Normale an einer Position einer spiegelnden Reflexion der optischen Achse der Beleuchtung aufweist und eine zweite Kamera mit einer zweiten optischen Achse von einfallendem Licht an einer von der Position der spiegelnden Reflexion verschiedenen Position aufweist.

3. Stahlblechbearbeitungsvorrichtung (100) nach Anspruch 2, wobei
in der Schnittansicht θ_{L} (°), der einen Winkel darstellt, der durch die Normale und die optische Achse der Beleuchtung gebildet wird, θ_{C1} (°), der einen Winkel darstellt, der durch die Normale und die erste optische Achse von einfallendem Licht gebildet wird, und θ_{C2} (°), der einen Winkel darstellt, der durch die Normale und die zweite optische Achse von einfallendem Licht gebildet wird, die folgenden Formeln 1 bis 3 erfüllen: ${θ}_{C 1} = - {θ}_{L}$ (Formel 1) ${θ}_{C 2} = A - {θ}_{L}$ (Formel 2) $60 ° \leq A \leq 120 °$ (Formel 3).

4. Stahlblechbearbeitungsvorrichtung (100) nach Anspruch 3, wobei
die Entscheidungseinheit (32, 56) ferner basierend auf dem durch die erste Kamera aufgenommenen Bild und dem durch die zweite Kamera aufgenommenen Bild entscheidet, ob die Nut (201) in der Schnittansicht eine Seitenwand mit einem Neigungswinkel aufweist, der einen zweiten Standard erfüllt, und
in einem Fall, in dem die Entscheidungseinheit (32, 56) entscheidet, dass der zweite Standard nicht erfüllt ist, die Verarbeitungssteuereinheit (33) die Laserbestrahlungseinheit (1) derart steuert, dass zusätzlich zum ersten Standard auch der zweite Standard erfüllt ist.

5. Stahlblechbearbeitungsvorrichtung (100) nach Anspruch 1, ferner aufweisend eine Entfernungseinheit, die dafür konfiguriert ist, einen in der Nut (201) erzeugten Vorsprung zu entfernen, wobei
die Verarbeitungssteuereinheit (33) zusätzlich zur Laserbestrahlungseinheit (1) die Entfernungseinheit steuert,
die Beleuchtungseinheit (22, 55) und die Abbildungseinheit (21, 54) in der Blechdurchlaufrichtung stromabwärts von einer Position der Entfernungseinheit angeordnet sind, und
die Entscheidungseinheit (32, 56) aufweist:
eine erste Entscheidungseinheit (32), die dafür konfiguriert ist, basierend auf dem aufgenommenen Bild zu entscheiden, ob die Nut (201) den ersten Standard erfüllt; und
eine zweite Entscheidungseinheit (56), die dafür konfiguriert ist, basierend auf dem aufgenommenen Bild zu entscheiden, ob der in der Nut (201) erzeugte Vorsprung einen dritten Standard einer Höhe und/oder einer Breite des Vorsprungs erfüllt, und
in einem Fall, in dem die zweite Entscheidungseinheit (56) entscheidet, dass der Vorsprung den dritten Standard nicht erfüllt, die Verarbeitungssteuereinheit (33) die Entfernungseinheit derart steuert, dass der Vorsprung entfernt wird.

6. Stahlblechbearbeitungsvorrichtung (100) nach Anspruch 5, ferner aufweisend eine weitere Beleuchtungseinheit (22, 55) und eine weitere Abbildungseinheit (21, 54), die in der Blechdurchlaufrichtung zwischen der Laserbestrahlungseinheit (1) und der Entfernungseinheit angeordnet sind.

7. Stahlblechbearbeitungsvorrichtung (100) nach Anspruch 5, ferner aufweisend:
eine Verfolgungseinheit, die dafür konfiguriert ist, eine Position der Nut (201) und eine Position des Vorsprungs auf der Oberfläche des Stahlblechs zu erfassen; und
eine Zuordnungseinheit, die dafür konfiguriert ist, eine Zuordnungstabelle zu erzeugen, die Nuteninformation, die die Position der Nut (201) mit einer Form der Nut verknüpft, und Vorsprunginformation enthält, die die Position des Vorsprungs mit einer Form des Vorsprungs verknüpft.

8. Stahlblechbearbeitungsvorrichtung (100) nach Anspruch 1, ferner aufweisend:
eine Entfernungseinheit, die dafür konfiguriert ist, einen in der Nut (201) erzeugten Vorsprung zu entfernen; und
eine Verarbeitungssteuereinheit (33), die dafür konfiguriert ist, einen Betrieb der Entfernungseinheit zu steuern, wobei
die Entscheidungseinheit basierend auf dem aufgenommenen Bild entscheidet, ob der in der Nut (201) erzeugte Vorsprung einen dritten Standard einer Höhe und/oder einer Breite des Vorsprungs erfüllt, und
in einem Fall, in dem die Entscheidungseinheit basierend auf dem aufgenommenen Bild entscheidet, dass der Vorsprung den dritten Standard nicht erfüllt, die Verarbeitungssteuereinheit (33) die Entfernungseinheit derart steuert, dass der Vorsprung entfernt wird.

9. Stahlblechbearbeitungsvorrichtung (100) nach einem der Ansprüche 1 bis 8, wobei die Entscheidungseinheit eine Entscheidung unter Verwendung eines durch maschinelles Lernen erzeugten maschinellen Lernmodells trifft.

10. Verfahren zum Steuern einer Stahlblechbearbeitungsvorrichtung (100) zum Bearbeiten einer Nut (201) auf einer Oberfläche eines Stahlblechs (200), das eine dunkle Fertigungslinie in einer Blechdurchlaufrichtung durchläuft, wobei das Verfahren aufweist:
einen Laserbestrahlungsschritt zum Bestrahlen der Oberfläche mit einem Laserstrahl von einer Laserbestrahlungseinheit (1) zum Ausbilden der Nut (201) parallel oder im Wesentlichen parallel zur Breitenrichtung des Stahlblechs (200),
wobei das Verfahren durch die folgenden Schritte gekennzeichnet ist:
einen Beleuchtungsschritt zum Bestrahlen der Nut (201) mit gepulstem Licht von einer Beleuchtungseinheit (22, 55);
einen Abbildungsschritt unter Verwendung einer Abbildungseinheit (21), wobei in dem Schritt die mit dem gepulsten Licht bestrahlte Nut (201) durch die Abbildungseinheit (21, 54) mit einer Belichtungszeit abgebildet wird, die länger ist als die Bestrahlungszeit des gepulsten Lichts, um ein aufgenommenes Bild auf der Basis eines Signals zu erzeugen, das von einer Synchronisationseinheit (31) empfangen wird und das den Zeitpunkt anzeigt, zu dem die auf dem durchlaufenden Stahlblech (200) ausgebildete Nut (201) die Abbildungsposition der Abbildungseinheit (21) erreicht;
einen Entscheidungsschritt zum Treffen einer Entscheidung basierend auf dem aufgenommenen Bild durch eine Entscheidungseinheit; und
einen Verarbeitungssteuerungsschritt zum Steuern eines Betriebs der Laserbestrahlungseinheit (1) durch eine Verarbeitungssteuereinheit (33), wobei
im Entscheidungsschritt basierend auf dem aufgenommenen Bild entschieden wird, ob die Nut (201) einen ersten Standard einer Tiefe und/oder einer Breite der Nut (201) erfüllt, und
in einem Fall, in dem im Entscheidungsschritt entschieden wird, dass die Nut (201) den ersten Standard nicht erfüllt, die Laserbestrahlungseinheit (1) im Verarbeitungssteuerungsschritt derart gesteuert wird, dass die durch die Laserbestrahlungseinheit (1) ausgebildete Nut (201) den ersten Standard erfüllt.

11. Verfahren nach Anspruch 10, wobei
in einer Schnittansicht entlang der Blechlaufrichtung in einer Blechdickenrichtung des Stahlblechs (200)
im Beleuchtungsschritt das gepulste Licht entlang einer optischen Beleuchtungsachse auf einer Seite in Bezug auf eine Normale zur Oberfläche des Stahlblechs (200) emittiert wird, und
im Abbildungsschritt die Abbildung entlang einer ersten Achse von einfallendem Licht auf einer anderen Seite in Bezug auf die Normale an einer Position von spiegelnder Reflexion der optischen Beleuchtungsachse ausgeführt wird und eine Abbildung entlang einer zweiten Achse von einfallendem Licht an einer von der Position der spiegelnden Reflexion verschiedenen Position ausgeführt wird.

12. Verfahren nach Anspruch 11, wobei
in der Schnittansicht im Beleuchtungsschritt und im Abbildungsschritt die optische Beleuchtungsachse, die erste optische Achse von einfallendem Licht und die zweite optische Achse von einfallendem Licht so festgelegt sind, dass die folgenden Formeln 1 bis 3 erfüllt sind: ${θ}_{C 1} = - {θ}_{L}$ (Formel 1) ${θ}_{C 2} = A - {θ}_{L}$ (Formel 2) $60 ° \leq A \leq 120 °$ (Formel 3)
wobei θ_{L} (°) einen Winkel darstellt, der durch die Normale und die optische Beleuchtungsachse gebildet wird, θ_{C1} (°) einen Winkel darstellt, der durch die Normale und die erste optische Achse von einfallendem Licht gebildet wird, und θ_{C2} (°) einen Winkel darstellt, der durch die Normale und die zweite optische Achse von einfallendem Licht gebildet wird.

13. Verfahren nach Anspruch 12, wobei
im Entscheidungsschritt ferner basierend auf dem durch eine Abbildung entlang der ersten optischen Achse von einfallendem Licht erhaltenen Bild und dem durch eine Abbildung entlang der zweiten optischen Achse von einfallendem Licht erhaltenen aufgenommenen Bild entschieden wird, ob die Nut (201) eine Seitenwand mit einem Neigungswinkel aufweist, der einen zweiten Standard erfüllt, und
in einem Fall, in dem im Entscheidungsschritt entschieden wird, dass der zweite Standard nicht erfüllt ist, die Laserbestrahlungseinheit (1) im Verarbeitungssteuerungsschritt derart gesteuert wird, dass zusätzlich zum ersten Standard auch der zweite Standard erfüllt ist.

14. Verfahren nach Anspruch 10, ferner aufweisend:
einen zeitlichen Abbildungsschritt zum Erfassen einer Vielzahl der aufgenommenen Bilder der Nut (201), die im Laufe der Zeit Positionen durchlaufen, die in der Blechbreitenrichtung des Stahlblechs (200) identisch sind;
einen Schritt zum Erfassen einer zeitlichen Änderung, in dem eine zeitliche Änderung der Form der Nut (201) erfasst wird, die die Positionen durchläuft, auf der Basis jedes der im zeitlichen Abbildungsschritt erhaltenen Bilder; und
einen Schritt zur Bestimmung der Notwendigkeit einer Einstellung der Laserbestrahlungseinheit (1) basierend darauf, ob die im Schritt zum Erfassen einer zeitlichen Änderung erhaltene zeitliche Änderung einen vierten Standard erfüllt.

15. Verfahren nach Anspruch 10, wobei
der Verarbeitungssteuerungsschritt einen Schritt zum Entfernen eines in der Nut (201) erzeugten Vorsprungs unter Verwendung einer in der Blechdurchlaufrichtung stromabwärts von der Laserbestrahlungseinheit (1) angeordneten Entfernungseinheit aufweist,
im Entscheidungsschritt zusätzlich zu einer Entscheidung bezüglich der Nut (201) eine auf dem aufgenommenen Bild basierende Entscheidung getroffen wird, ob ein dritter Standard als Standard der Höhe und/oder der Breite des Vorsprungs erfüllt ist, und
in einem Fall, in dem im Entscheidungsschritt entschieden wird, dass der Vorsprung den dritten Standard nicht erfüllt, der Vorsprung im Verarbeitungssteuerungsschritt entfernt wird.

16. Verfahren nach Anspruch 15, wobei
der Beleuchtungsschritt, der Abbildungsschritt und der Entscheidungsschritt jeweils an folgenden Positionen ausgeführt werden:
an einer Position zwischen der Laserbestrahlungseinheit (1) und der Entfernungseinheit in der Blechdurchlaufrichtung, und
an einer Position stromabwärts von der Entfernungseinheit in der Blechdurchlaufrichtung.

17. Verfahren nach Anspruch 15, ferner aufweisend:
einen Verfolgungsschritt zum Erfassen einer Position der Nut (201) und einer Position des Vorsprungs auf der Oberfläche des Stahlblechs (200); und
einen Zuordnungsschritt zum Erzeugen einer Zuordnungstabelle, die Nuteninformation, die die Position der Nut (201) mit einer Form der Nut verknüpft, und Vorsprunginformation enthält, die die Position des Vorsprungs mit einer Form des Vorsprungs verknüpft.

18. Verfahren nach Anspruch 10, ferner aufweisend:
einen Entfernungsschritt zum Entfernen eines in der Nut (201) erzeugten Vorsprungs durch eine Entfernungseinheit, wobei
im Entscheidungsschritt basierend auf dem aufgenommenen Bild entschieden wird, ob ein dritter Standard als Standard für eine Höhe und/oder eine Breite des Vorsprungs erfüllt ist, und
in einem Fall, in dem im Entscheidungsschritt entschieden wird, dass der Vorsprung den dritten Standard nicht erfüllt, die Entfernungseinheit derart gesteuert wird, dass der Vorsprung im Entfernungsschritt entfernt wird.

19. Verfahren nach einem der Ansprüche 10 bis 18, wobei eine Entscheidung im Entscheidungsschritt unter Verwendung eines durch maschinelles Lernen erzeugten maschinellen Lernmodells erfolgt.

## Revendications

1. Dispositif de traitement de tôles d'acier (100) destiné à traiter une rainure (201) sur la surface d'une tôle d'acier (200) déplacée dans une direction d'avancement de la tôle dans une ligne de fabrication sans ouvriers, le dispositif de traitement de tôles d'acier (100) comprenant :
une unité d'irradiation laser (1) configurée pour irradier la surface avec un faisceau laser afin de former la rainure (201) parallèlement ou sensiblement parallèlement à une direction de largeur de tôle de la tôle d'acier (200) ;
le dispositif de traitement de tôles d'acier étant **caractérisé en ce qu'**il comprend :
une unité de traitement arithmétique (3) comprenant une unité de synchronisation (31), une unité de détermination (32) et une unité de commande de traitement (33) ; dans laquelle l'unité de synchronisation (31) est reliée à l'unité d'irradiation laser (1), à une unité d'imagerie (21) et à une unité d'éclairage (22), et est configurée pour recevoir un signal indiquant la fin d'un unique cycle de balayage de l'unité d'irradiation laser (1) ;
l'unité d'éclairage (22, 55) étant configurée pour irradier la rainure (201) formée par l'unité d'irradiation laser (1) avec une lumière pulsée ;
l'unité d'imagerie (21, 54) étant configurée pour imager la rainure (201) irradiée avec la lumière pulsée avec un temps d'exposition supérieur à un temps d'irradiation de la lumière pulsée afin de générer une image capturée, dans lequel l'unité de synchronisation (31) est en outre configurée pour synchroniser le moment d'imagerie de l'unité d'imagerie (21) avec le moment d'irradiation de l'unité d'éclairage (22) de sorte que le temps d'exposition Ti dans l'unité d'imagerie (21) et le temps d'irradiation Tp de la lumière pulsée dans l'unité d'éclairage (22) se chevauchent temporellement ;
l'unité de détermination (32, 56) étant configurée pour effectuer une détermination sur la base de l'image capturée ; et
l'unité de commande de traitement (33) étant configurée pour commander une opération de l'unité d'irradiation laser (1), dans lequel
l'unité de détermination (32, 56) détermine si la rainure (201) satisfait une première norme relative à au moins l'une d'une profondeur ou d'une largeur de la rainure (201) sur la base de l'image capturée, et
dans le cas où l'unité de détermination (32, 56) détermine que la rainure (201) ne satisfait pas la première norme, l'unité de commande de traitement (33) commande l'unité d'irradiation laser (1) de sorte que la rainure (201) formée par l'unité d'irradiation laser (1) satisfait la première norme.

2. Dispositif de traitement de tôles d'acier (100) selon la revendication 1, dans lequel,
dans une vue en coupe selon la direction d'avancement de la tôle dans une direction d'épaisseur de tôle de la tôle d'acier (200),
l'unité d'éclairage (22, 55) présente un axe optique d'éclairage d'un côté par rapport à une ligne normale de la surface, et
l'unité d'imagerie (21, 54) comprend une première caméra ayant un premier axe optique incident, de l'autre côté par rapport à la ligne normale, à une position de réflexion spéculaire de l'axe optique d'éclairage et comprend une deuxième caméra ayant un deuxième axe optique incident à une position différente de la position de réflexion spéculaire.

3. Dispositif de traitement de tôles d'acier (100) selon la revendication 2, dans lequel,
dans la vue en coupe, θ_{L} (°) représentant un angle formé par la ligne normale et l'axe optique d'éclairage, θ_{C1} (°) représentant un angle formé par la ligne normale et le premier axe optique incident, et θ_{C2} (°) représentant un angle formé par la ligne normale et le deuxième axe optique incident satisfont aux Formules 1 à 3 décrites ci-dessous : ${θ}_{C 1} = - {θ}_{L}$ (Formule 1) ${θ}_{C 2} = A - {θ}_{L}$ (Formule 2) $60 ° \leq A \leq 120 °$ (Formule 3)

4. Dispositif de traitement de tôles d'acier (100) selon la revendication 3, dans lequel
l'unité de détermination (32, 56) détermine en outre si la rainure (201) dans la vue en coupe présente une paroi latérale ayant un angle d'inclinaison satisfaisant une deuxième norme sur la base de l'image capturée qui est capturée par la première caméra et de l'image capturée qui est capturée par la deuxième caméra, et
dans le cas où l'unité de détermination (32, 56) détermine que la deuxième norme n'est pas satisfaite, l'unité de commande de traitement (33) commande l'unité d'irradiation laser (1) de sorte que la deuxième norme, en plus de la première norme, est satisfaite.

5. Dispositif de traitement de tôles d'acier (100) selon la revendication 1, comprenant en outre une unité d'enlèvement configurée pour enlever une saillie générée dans la rainure (201), dans lequel
l'unité de commande de traitement (33) commande l'unité d'enlèvement en plus de l'unité d'irradiation laser (1),
l'unité d'éclairage (22, 55) et l'unité d'imagerie (21, 54) sont disposées en aval d'une position de l'unité d'enlèvement dans la direction d'avancement de la tôle,
l'unité de détermination (32, 56) comprend :
une première unité de détermination (32) configurée pour déterminer si la rainure (201) satisfait la première norme sur la base de l'image capturée ; et
une deuxième unité de détermination (56) configurée pour déterminer si la saillie générée dans la rainure (201) satisfait une troisième norme relative à au moins l'une d'une hauteur ou d'une largeur de la saillie sur la base de l'image capturée, et
dans le cas où la deuxième unité de détermination (56) détermine que la saillie ne satisfait pas la troisième norme, l'unité de commande de traitement (33) commande l'unité d'enlèvement pour enlever la saillie.

6. Dispositif de traitement de tôles d'acier (100) selon la revendication 5, comprenant en outre une autre unité d'éclairage (22, 55) et une autre unité d'imagerie (21, 54) disposées entre l'unité d'irradiation laser (1) et l'unité d'enlèvement dans la direction d'avancement de la tôle.

7. Dispositif de traitement de tôles d'acier (100) selon la revendication 5, comprenant en outre :
une unité de suivi configurée pour acquérir une position de la rainure (201) et une position de la saillie sur la surface de la tôle d'acier ; et
une unité de cartographie configurée pour créer une carte comprenant des informations de rainure associant la position de la rainure (201) à une forme de la rainure et des informations de saillie associant la position de la saillie à une forme de la saillie.

8. Dispositif de traitement de tôles d'acier (100) selon la revendication 1, comprenant en outre :
une unité d'enlèvement configurée pour enlever une saillie générée dans la rainure (201) ; et
une unité de commande de traitement (33) configurée pour commander une opération de l'unité d'enlèvement, dans lequel
l'unité de détermination détermine si la saillie générée dans la rainure (201) satisfait une troisième norme relative à au moins l'une d'une hauteur ou d'une largeur de la saillie sur la base de l'image capturée, et
dans le cas où l'unité de détermination détermine que la saillie ne satisfait pas la troisième norme sur la base de l'image capturée, l'unité de commande de traitement (33) commande l'unité d'enlèvement pour enlever la saillie.

9. Dispositif de traitement de tôles d'acier (100) selon l'une quelconque des revendications 1 à 8, dans lequel l'unité de détermination effectue une détermination à l'aide d'un modèle d'apprentissage automatique généré par apprentissage automatique.

10. Procédé de commande d'un dispositif de traitement de tôles d'acier (100) destiné à traiter une rainure (201) sur la surface d'une tôle d'acier (200) déplacée dans une direction d'avancement de la tôle dans une ligne de fabrication sans ouvriers, le procédé comprenant :
une étape d'irradiation laser consistant à irradier la surface avec un faisceau laser provenant d'une unité d'irradiation laser (1) pour former la rainure (201) parallèlement ou sensiblement parallèlement à une direction de largeur de tôle de la tôle d'acier (200) ;
le procédé étant **caractérisé par** les étapes suivantes :
une étape d'éclairage consistant à irradier la rainure (201) avec une lumière pulsée provenant d'une unité d'éclairage (22, 55) ;
une étape d'imagerie consistant, à l'aide d'une unité d'imagerie (21), à imager la rainure (201) irradiée avec la lumière pulsée par une unité d'imagerie (21, 54) avec un temps d'exposition supérieur à un temps d'irradiation de la lumière pulsée afin de générer une image capturée sur la base d'un signal reçu d'une unité de synchronisation (31), laquelle indique le moment où la rainure (201) formée sur la tôle d'acier (200) en déplacement atteint la position d'imagerie de l'unité d'imagerie (21) ;
une étape de détermination consistant à effectuer une détermination sur la base de l'image capturée par une unité de détermination ; et
une étape de commande de traitement consistant à commander une opération de l'unité d'irradiation laser (1) par une unité de commande de traitement (33), dans lequel,
lors de l'étape de détermination, une détermination sur la base de l'image capturée est effectuée pour savoir si la rainure (201) satisfait une première norme relative à au moins l'une d'une profondeur ou d'une largeur de la rainure (201), et
dans le cas où il est déterminé que la rainure (201) ne satisfait pas la première norme lors de l'étape de détermination, l'unité d'irradiation laser (1) est commandée lors de l'étape de commande de traitement de sorte que la rainure (201) formée par l'unité d'irradiation laser (1) satisfait la première norme.

11. Procédé selon la revendication 10, dans lequel,
dans une vue en coupe selon la direction d'avancement de la tôle dans une direction d'épaisseur de tôle de la tôle d'acier (200),
lors de l'étape d'éclairage, la lumière pulsée est émise selon un axe optique d'éclairage d'un côté par rapport à une ligne normale à la surface de la tôle d'acier (200), et
lors de l'étape d'imagerie, l'imagerie est effectuée selon un premier axe optique incident, de l'autre côté par rapport à la ligne normale, à une position de réflexion spéculaire de l'axe optique d'éclairage, et l'imagerie est effectuée selon un deuxième axe optique incident à une position différente de la position de réflexion spéculaire.

12. Procédé selon la revendication 11, dans lequel,
dans la vue en coupe, lors de l'étape d'éclairage et de l'étape d'imagerie, l'axe optique d'éclairage, le premier axe optique incident et le deuxième axe optique incident sont définis de manière à satisfaire les Formules 1 à 3 décrites ci-dessous : ${θ}_{C 1} = - {θ}_{L}$ (Formule 1) ${θ}_{C 2} = A - {θ}_{L}$ (Formule 2) $60 ° \leq A \leq 120 °$ (Formule 3)
dans lesquelles θ_{L} (°) représente un angle formé par la ligne normale et l'axe optique d'éclairage, θ_{C1} (°) représente un angle formé par la ligne normale et le premier axe optique incident, et θ_{C2} (°) représente un angle formé par la ligne normale et le deuxième axe optique incident.

13. Procédé selon la revendication 12, dans lequel,
lors de l'étape de détermination, une détermination est en outre effectuée pour savoir si la rainure (201) présente une paroi latérale ayant un angle d'inclinaison satisfaisant une deuxième norme sur la base de l'image capturée obtenue par imagerie selon le premier axe optique incident et de l'image capturée obtenue par imagerie selon le deuxième axe optique incident, et
dans le cas où il est déterminé que la deuxième norme n'est pas satisfaite lors de l'étape de détermination, l'unité d'irradiation laser (1) est commandée lors de l'étape de commande de traitement de sorte que la deuxième norme, en plus de la première norme, est satisfaite.

14. Procédé selon la revendication 10, comprenant en outre :
une étape d'imagerie temporelle consistant à acquérir une pluralité d'images capturées de la rainure (201) passant à travers des positions identiques dans la direction de largeur de tôle de la tôle d'acier (200) au cours du temps ;
une étape d'acquisition de variation temporelle consistant à acquérir une variation temporelle de la forme de la rainure (201) passant à travers les positions sur la base de chacune de la pluralité d'images capturées obtenues lors de l'étape d'imagerie temporelle ; et
une étape de détermination de nécessité d'ajustement consistant à déterminer la nécessité d'un ajustement de l'unité d'irradiation laser (1) selon que la variation temporelle obtenue lors de l'étape d'acquisition de variation temporelle satisfait ou non une quatrième norme.

15. Procédé selon la revendication 10, dans lequel
l'étape de commande de traitement comprend une étape d'enlèvement d'une saillie générée dans la rainure (201) à l'aide d'une unité d'enlèvement située en aval de l'unité d'irradiation laser (1) dans la direction d'avancement de la tôle,
lors de l'étape de détermination, en plus d'une détermination concernant la rainure (201), une détermination basée sur l'image capturée est effectuée pour savoir si une troisième norme, en tant que norme relative à au moins l'une d'une hauteur ou d'une largeur de la saillie, est satisfaite, et,
dans le cas où il est déterminé que la saillie ne satisfait pas la troisième norme lors de l'étape de détermination, la saillie est enlevée lors de l'étape de commande de traitement.

16. Procédé selon la revendication 15, dans lequel
l'étape d'éclairage, l'étape d'imagerie et l'étape de détermination sont individuellement réalisées à chacune parmi
une position entre l'unité d'irradiation laser (1) et l'unité d'enlèvement dans la direction d'avancement de la tôle, et
une position en aval de l'unité d'enlèvement dans la direction d'avancement de la tôle.

17. Procédé selon la revendication 15, comprenant en outre :
une étape de suivi consistant à acquérir une position de la rainure (201) et une position de la saillie sur la surface de la tôle d'acier (200) ; et
une étape de cartographie consistant à créer une carte comprenant des informations de rainure associant la position de la rainure (201) à une forme de la rainure et des informations de saillie associant la position de la saillie à une forme de la saillie.

18. Procédé selon la revendication 10, comprenant en outre :
une étape d'enlèvement consistant à enlever une saillie générée dans la rainure (201), par le biais d'une unité d'enlèvement, dans lequel,
lors de l'étape de détermination, une détermination basée sur l'image capturée est effectuée pour savoir si une troisième norme, en tant que norme relative à au moins l'une d'une hauteur ou d'une largeur de la saillie, est satisfaite, et,
dans le cas où il est déterminé que la saillie ne satisfait pas la troisième norme lors de l'étape de détermination, l'unité d'enlèvement est commandée pour enlever la saillie lors de l'étape d'enlèvement.

19. Procédé selon l'une quelconque des revendications 10 à 18, dans lequel une détermination lors de l'étape de détermination est effectuée à l'aide d'un modèle d'apprentissage automatique généré par apprentissage automatique.
